(19) Europäisches Patentamt / European Patent Office / Office européen des brevets

(11) **EP 4 675 513 A1**

(12) **EUROPEAN PATENT APPLICATION**

(43) Date of publication:
**07.01.2026 Bulletin 2026/02**

(21) Application number: **25185265.3**

(22) Date of filing: **25.06.2025**

(51) International Patent Classification (IPC):
**G06N 10/20** (2022.01)    **G06N 10/70** (2022.01)

(52) Cooperative Patent Classification (CPC):
**G06N 10/70; G06N 10/20**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **28.06.2024 JP 2024105488**

(71) Applicant: **FUJITSU LIMITED**
**Kawasaki-shi, Kanagawa 211-8588 (JP)**

(72) Inventor: **AKAHOSHI, Yutaro**
**Kawasaki-shi, 211-8588 (JP)**

(74) Representative: **Haseltine Lake Kempner LLP**
**Cheapside House**
**138 Cheapside**
**London EC2V 6BJ (GB)**

(54) **COMPUTER PROGRAM, QUANTUM COMPUTATION SUPPORT METHOD, AND INFORMATION PROCESSING APPARATUS**

(57) An information processing apparatus causes a quantum computer to perform a first gate operation in accordance with an ancilla state generation circuit representing a procedure of generating a code including a logical qubit representing an ancilla state and a gauge qubit representing a redundant degree of freedom other than the ancilla state. Next, the information processing apparatus causes the quantum computer to perform a second gate operation in accordance with an error detection circuit representing a procedure of detecting an error occurring in a plurality of physical qubits constituting the code generated by the first gate operation. Then, the information processing apparatus determines the presence or absence of the error on the basis of a measurement value obtained by the second gate operation, the measurement value indicating the state of the gauge qubit.

FIG. 1

**Description**

FIELD

The embodiments discussed herein relate to a computer program, a quantum computation support method, and an information processing apparatus.

BACKGROUND

In a quantum computer, quantum computations are executed in accordance with a quantum circuit by performing gate operations on qubits. An individual qubit is the minimum unit of information used in computation and corresponds to a bit (a classical bit) in a classical computer. Unlike classical bits, each qubit is also able to take a superposition state of "0" and "1".

Qubit information may be destroyed (errors may occur) due to interactions with the environment, errors in gate operations, or others. Countermeasures against such errors include quantum error correction and quantum error mitigation.

The quantum error correction is a process of detecting the occurrence of an error and correcting the error by (redundantly) encoding quantum information using a plurality of qubits. Hereinafter, qubits that are not encoded are referred to as physical qubits, and a set of encoded qubits is referred to as a logical qubit. The quantum error mitigation is a process of advancing the computation with errors and mitigating the impacts of the errors by, for example, modifying the quantum circuit, extrapolating a measurement result, or others.

Quantum computers that perform quantum computations while performing the quantum error correction on logical qubits are called fault-tolerant quantum computers (FTQCs). FTQCs are able to perform various kinds of quantum computations by combining predetermined basic gates. The predetermined basic gates include the H gate, the CNOT gate, the S gate, and the T gate. The H gate, the CNOT gate, and the S gate are quantum gates for Clifford operations, and the T gate is a quantum gate for non-Clifford operations. A set of these basic gates is called Clifford+T.

Among these Clifford+T gates, the T gate uses a huge number of physical qubits for error correction. Therefore, an FTQC for performing useful computation needs a scale of about one million physical qubits.

As a technique for reducing the number of physical qubits used for error correction, for example, a high-efficiency phase rotation gate quantum computing architecture called a space-time efficient analog rotation quantum computing (STAR) architecture has been proposed. See, for example, the following literatures.

Yutaro Akahoshi, Kazunori Maruyama, Hirotaka Oshima, Shintaro Sato, and Keisuke Fujii, "Partially Fault-tolerant Quantum Computing Architecture with Error-corrected Clifford Gates and Space-time Efficient Analog Rotations," arXiv:2303.13181v1, 23 Mar 2023.

Yutaro Akahoshi, Kazunori Maruyama, Hirotaka Oshima, Shintaro Sato, and Keisuke Fujii, "Partially Fault-Tolerant Quantum Computing Architecture with Error-Corrected Clifford Gates and Space-Time Efficient Analog Rotations," PRX QUANTUM, Vol. 5, Page 010337, 5 March, 2024

The STAR architecture adopts the phase rotation gate as a basic gate instead of the T gate, which has a high error correction cost. Without the T gate, it is possible to reduce the number of physical qubits used for quantum computation and to speed up gate operations. However, error correction in the phase rotation gate is incomplete. Therefore, in order to obtain a correct computation result, it is crucial to minimize the occurrence of errors in the phase rotation gate as much as possible.

SUMMARY

It is desirable to reduce the occurrence of errors in a phase rotation gate.

In one aspect, there is provided a computer program that causes a computer to perform a process including: causing a quantum computer to perform a first gate operation in accordance with an ancilla state generation circuit representing a procedure of generating a code including a logical qubit and a gauge qubit, the logical qubit representing an ancilla state to be input to a gate teleportation circuit, the gauge qubit representing a redundant degree of freedom other than the ancilla state, the gate teleportation circuit being configured to implement a phase rotation gate; causing the quantum computer to perform a second gate operation in accordance with an error detection circuit representing a procedure of detecting an error occurring in a plurality of physical qubits constituting the code generated by the first gate operation; and determining a presence or absence of the error, based on a measurement value obtained by the second gate operation, the measurement value indicating a state of the gauge qubit.

BRIEF DESCRIPTION OF DRAWINGS

The invention is described, by way of example only, with reference to the following drawings, in which:

FIG. 1 illustrates an example of a quantum computation support method according to a first embodiment;
FIG. 2 illustrates an example of a system configuration according to a second embodiment;
FIG. 3 illustrates an example of hardware of a quantum computing system;
FIG. 4 illustrates the characteristics of a qubit;
FIG. 5 illustrates an example of quantum error correction;
FIG. 6 illustrates an example of basic gates used in fault-tolerant quantum computation;
FIG. 7 illustrates an example of a quantum circuit that performs a gate operation for an arbitrary rotation;
FIG. 8 illustrates an example of a quantum circuit for preparing an ancilla state;
FIG. 9 illustrates an example of an error detection circuit;
FIG. 10 illustrates an example of an error that is difficult to remove;
FIG. 11 illustrates an example of an output state of an ancilla state generation circuit;
FIG. 12 illustrates an example of state changes caused by measurements;
FIG. 13 illustrates an example of an error detection circuit capable of detecting a YY error;
FIG. 14 illustrates a comparison example in the measurement order of the eigenvalues of gauge operators between error detection circuits;
FIG. 15 illustrates an example of state changes of a [[4,1,1,2]] code according to measurement orders of gauge operators;
FIG. 16 illustrates an example of error detection;
FIG. 17 illustrates an example of expansion to a surface code;
FIG. 18 is a block diagram illustrating an example of functions for quantum computation in the quantum computing system;
FIG. 19 is a block diagram illustrating an example of functions of an arbitrary rotation execution unit;
FIG. 20 is a flowchart illustrating an example procedure for quantum computation in a classical computer;
FIG. 21 is a flowchart illustrating an example procedure for a quantum circuit execution process;
FIG. 22 is a flowchart illustrating an example procedure for an ancilla state generation process.
FIG. 23 is a flowchart illustrating an example procedure for an error determination process;
FIG. 24 illustrates an example of logical error rates obtained in the case where error detection including a YY error is performed; and
FIG. 25 illustrates an example of probabilities of failure in the generation of an ancilla state.

DESCRIPTION OF EMBODIMENTS

Hereinafter, embodiments will be described with reference to the drawings. A plurality of embodiments may be combined unless they exclude each other.

[First Embodiment]

A first embodiment provides a quantum computation support method capable of reducing the occurrence of errors in a phase rotation gate.

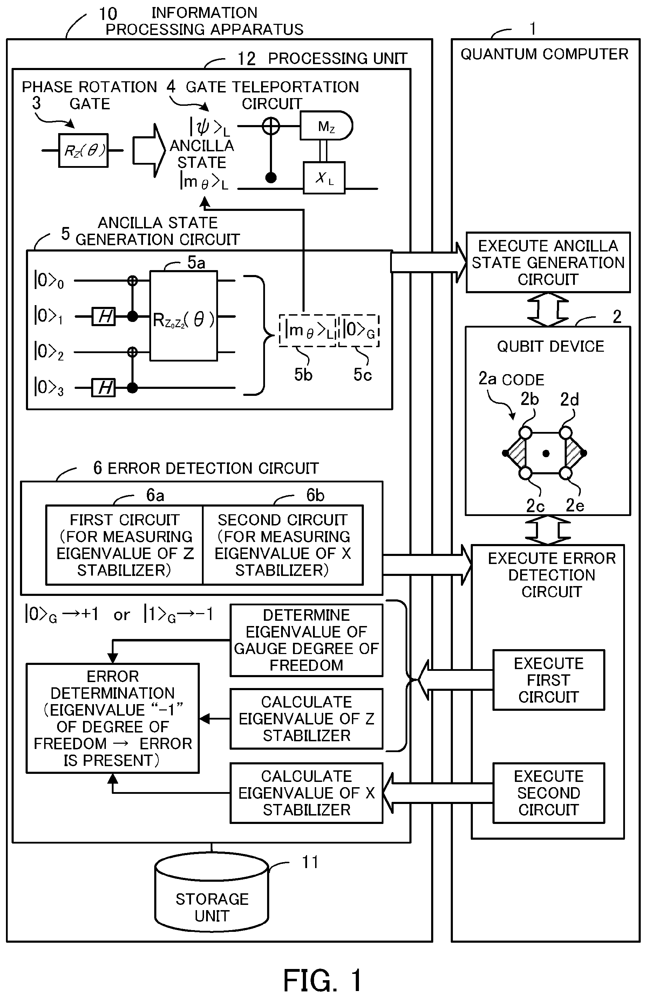

FIG. 1 illustrates an example of the quantum computation support method according to the first embodiment. FIG. 1 illustrates an information processing apparatus 10 that implements the quantum computation support method. For example, the information processing apparatus 10 implements the quantum computation support method by executing a quantum computation support program.
The information processing apparatus 10 includes, for example, a storage unit 11 and a processing unit 12. The storage unit 11 is, for example, a memory or a storage device included in the information processing apparatus 10. The processing unit 12 is, for example, a processor or an arithmetic circuit included in the information processing apparatus 10.
The storage unit 11 stores, for example, a quantum computation support program. The storage unit 11 also stores a quantum circuit representing a procedure of quantum computation for solving a problem to be solved. Further, the storage unit 11 stores various quantum circuits that are generally used for quantum computation. For example, the storage unit 11 stores a gate teleportation circuit 4 for implementing a phase rotation gate 3. In addition, the storage unit 11 stores an ancilla state generation circuit 5 representing a procedure of generating a code 2a including a logical qubit 5b representing an ancilla state to be input to the gate teleportation circuit 4 and a gauge qubit 5c representing a redundant degree of freedom (a gauge degree of freedom) other than the ancilla state. Further, the storage unit 11 stores an error detection circuit 6 representing a procedure of detecting errors occurring in a plurality of physical qubits 2b to 2e constituting the code 2a generated through a first gate operation based on the ancilla state generation circuit 5.

The processing unit 12 causes a quantum computer 1 to perform a gate operation in accordance with a quantum circuit. The quantum computer 1 includes a qubit device 2. The quantum computer 1 executes quantum computation in accordance with an instruction from the processing unit 12. For example, the quantum computer 1 performs quantum computation using a logical qubit obtained by encoding the states of qubits. For example, the code 2a may be constituted by some physical qubits 2b to 2e among the qubits included in the qubit device 2.

For example, in the case where a quantum circuit to be executed includes the phase rotation gate 3, the processing unit 12 causes the quantum computer 1 to perform the first gate operation in accordance with the ancilla state generation circuit 5 in order to generate an ancilla state to be input to the gate teleportation circuit 4. The quantum computer 1 performs the first gate operation in accordance with an instruction from the processing unit 12. As a result, the code 2a including the logical qubit 5b and the gauge qubit 5c is generated.

Further, the processing unit 12 causes the quantum computer 1 to perform a second gate operation in accordance with the error detection circuit 6. The quantum computer 1 performs the second gate operation in accordance with an instruction from the processing unit 12. The quantum computer 1 transmits the measurement value obtained by executing the second gate operation to the processing unit 12.

The processing unit 12 determines the presence or absence of an error on the basis of the measurement value indicating the state of the gauge qubit 5c, obtained by the second gate operation.

In this way, an error affecting the state of the gauge qubit 5c but not affecting the ancilla state represented by the logical qubit 5b is detected. This leads to a reduction in the likelihood of errors in an ancilla state used in the execution of the phase rotation gate 3, which in turn reduces the error rate in the gate operation of the phase rotation gate 3.

Errors that affect the state of the gauge qubit 5c include a YY error that occurs during the execution of a two-qubit rotation gate 5a. For example, the ancilla state generation circuit 5 may include the two-qubit rotation gate 5a that applies a phase rotation to a first physical qubit and a second physical qubit. In this case, in the gate operation of the two-qubit rotation gate 5a, a YY error may occur in which an undesirable Y operator acts on the first physical qubit and the second physical qubit.

Such a YY error acts on the state of the gauge qubit 5c, thereby changing the state. For example, if the YY error does not occur, the state of the gauge qubit 5c is "$|0\rangle_G$". If the YY error occurs, the state of the gauge qubit 5c becomes "$|1\rangle_G$".

At this time, the processing unit 12 determines that an error is present when receiving a measurement value indicating the state of the gauge qubit 5c changed due to the YY error occurring during the gate operation of the two-qubit rotation gate 5a.

In the case where the YY error has occurred, the processing unit 12 discards the ancilla state generated at that time and generates an ancilla state again. This prevents the gate teleportation circuit 4 from being executed using an ancilla state including an undetected error, which results in a reduction in the occurrence of errors in the phase rotation gate 3.

The error detection circuit 6 includes, for example, a first circuit 6a for measuring the eigenvalue of a Z stabilizer on the plurality of physical qubits 2b to 2e constituting the code 2a and a second circuit 6b for measuring the eigenvalue of an X stabilizer. In this case, the execution of the second circuit 6b collapses the state of the gauge qubit 5c, which results in a failure in the detection of an error based on the state of the gauge qubit 5c. To address this, the processing unit 12 causes the quantum computer 1 to perform the second gate operation in accordance with the error detection circuit 6 in which the second circuit 6b is arranged after the first circuit 6a.

Then, the processing unit 12 determines the presence or absence of an error on the basis of the measurement value obtained by the execution of the first circuit 6a. For example, by executing the first circuit 6a, the eigenvalue of the gauge degree of freedom represented by the gauge qubit 5c is obtained as a measurement value. If the state of the gauge qubit 5c is "$|0\rangle_G$", the eigenvalue of the gauge degree of freedom is "+1". If the state of the gauge qubit 5c is "$|1\rangle_G$", the eigenvalue of the gauge degree of freedom is "-1". If the eigenvalue of the gauge degree of freedom obtained as the measurement value is "-1", the processing unit 12 determines that the state of the gauge qubit 5c is "$|1\rangle_G$" and the YY error has occurred. In this manner, it is possible to perform the error detection based on the state of the gauge qubit 5c, which leads to a reduction in the occurrence of errors in the phase rotation gate 3.

In addition, the processing unit 12 calculates the eigenvalue of the Z stabilizer from the measurement value obtained by the execution of the first circuit 6a, and determines that an error is present also in the case where the eigenvalue of the Z stabilizer is "-1", for example. In addition, the processing unit 12 calculates the eigenvalue of the X stabilizer from the measurement value obtained by the execution of the second circuit 6b, and determines that an error is present also in the case where the eigenvalue of the X stabilizer is "-1", for example.

The error detection circuit 6 is a circuit that detects the presence or absence of an error without affecting the state of the logical qubit 5b by using physical qubits for measurement (measurement qubits) adjacent to the physical qubits 2b to 2e constituting the code 2a. For example, it is assumed that the ancilla state generation circuit 5 includes the two-qubit rotation gate 5a that applies a phase rotation to the first physical qubit and the second physical qubit. In this case, in the error detection circuit 6, the first circuit 6a for measuring the eigenvalue of the Z stabilizer includes the following quantum gates, as a circuit for detecting an error in the gauge qubit 5c.

For example, the first circuit 6a includes CNOT gates for measuring the state of the first physical qubit and the error information of the second physical qubit using a measurement qubit. A first CNOT gate is a CNOT gate that uses the first physical qubit as the control qubit and the measurement qubit as the target qubit. A second CNOT gate is a CNOT gate that uses the second physical qubit as the control qubit and the measurement qubit as the target qubit.

The processing unit 12 causes the quantum computer 1 to execute the error detection circuit 6 in which the above first circuit 6a is arranged before the second circuit 6b. Then, the processing unit 12 determines the state of the gauge qubit based on the measurement value in the Z basis of the measurement qubit. For example, the processing unit 12 determines that an error is absent if the measurement value is "+1", and determines that an error is present if the measurement value is "-1". In this manner, it is possible to detect a YY error occurring from the two-qubit rotation gate 5a included in the ancilla state generation circuit 5, for example.

Note that the measurement value of the measurement qubit indicates, for example, the eigenvalue of the gauge degree of freedom represented by the gauge qubit 5c. For example, when a YY error generated in the two-qubit rotation gate 5a included in the ancilla state generation circuit 5 occurs, the eigenvalue of the gauge degree of freedom represented by the gauge qubit 5c is flipped. If the eigenvalue of the gauge degree of freedom represented by the gauge qubit 5c is not flipped, the measurement value of the measurement qubit is "+1". If the eigenvalue of the gauge degree of freedom represented by the gauge qubit 5c is flipped, the measurement value of the measurement qubit is "-1".

As the code 2a including the logical qubit 5b representing the ancilla state and the gauge qubit 5c representing the gauge degree of freedom, a [[4,1,1,2]] code is applied. The [[4,1,1,2]] code is a code in which the number of physical qubits to be used is four, the logical qubit 5b representing an ancilla state is one bit, the gauge qubit 5c is one bit, and the code distance is two. The use of the [[4,1,1,2]] code enables the generation of a quantum state using the code 2a including the gauge qubit 5c and also enables error detection based on the state of the gauge qubit 5c.

[Second Embodiment]

A second embodiment provides a quantum computing system capable of reducing the occurrence of errors in a phase rotation gate during quantum computation by a STAR architecture.

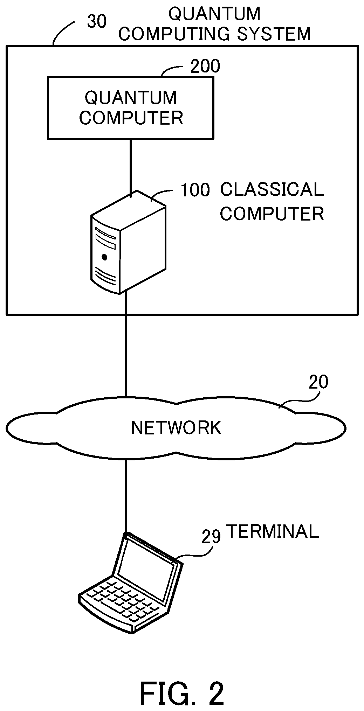

FIG. 2 illustrates an example of a system configuration according to the second embodiment. A quantum computing system 30 includes a classical computer 100 and a quantum computer 200. The classical computer 100 is a so-called von Neumann computer. The quantum computer 200 is a non-von Neumann computer to which the principle of quantum mechanics is applied. The classical computer 100 is connected to a terminal 29 via a network 20. The terminal 29 is a von Neumann computer used by a user.

The user uses the terminal 29 to create a quantum circuit for solving a problem through quantum computation. The created quantum circuit is transmitted from the terminal 29 to the quantum computing system 30. In the quantum computing system 30, the classical computer 100 and the quantum computer 200 cooperate with each other to execute quantum computation in accordance with the received quantum circuit. Then, the quantum computing system 30 transmits the computation result to the terminal 29.

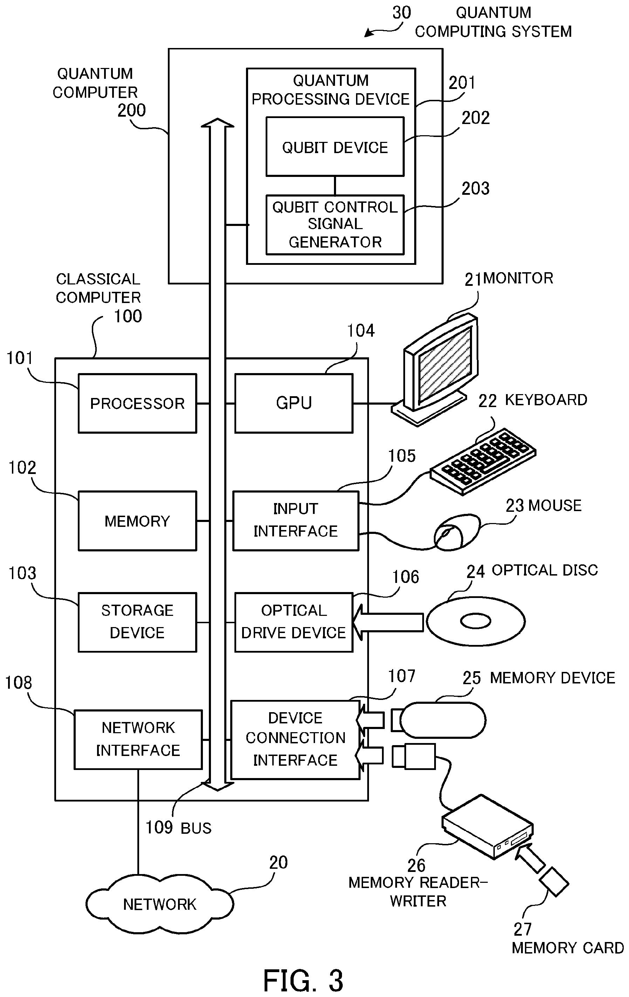

FIG. 3 illustrates an example of hardware of the quantum computing system. The classical computer 100 is entirely controlled by a processor 101. A memory 102 and a plurality of peripheral devices are connected to the processor 101 via a bus 109. The processor 101 may be a multiprocessor. A set of a plurality of processors in a multiprocessor system may be referred to as the processor 101. The processor 101 may be referred to as processor circuitry. Each of the plurality of processors is able to perform some or all of a plurality of processes that are performed by the classical computer 100. Two or more processes among a plurality of related processes may be performed by different processors. The processor 101 is, for example, a central processing unit (CPU), a micro processing unit (MPU), or a digital signal processor (DSP). At least a part of the functions implemented by the processor 101 executing programs may be implemented by an electronic circuit such as an application specific integrated circuit (ASIC) or a programmable logic device (PLD).

The memory 102 is used as a main memory device of the classical computer 100. The memory 102 temporarily stores at least part of an operating system (OS) program and application programs to be executed by the processor 101. The memory 102 also stores various data used for processing by the processor 101. As the memory 102, for example, a volatile semiconductor memory device such as a random access memory (RAM) is used.

The peripheral devices connected to the bus 109 include a storage device 103, a graphics processing unit (GPU) 104, an input interface 105, an optical drive device 106, a device connection interface 107, and a network interface 108.

The storage device 103 electrically or magnetically writes and reads data to and from a built-in storage medium. The storage device 103 is used as an auxiliary storage device of the classical computer 100. The storage device 103 stores the OS program, application programs, and various data. As the storage device 103, for example, a hard disk drive (HDD) or a solid state drive (SSD) may be used.

The GPU 104 is an arithmetic unit that performs image processing. The GPU 104 is an example of a graphic controller. A monitor 21 is connected to the GPU 104. The GPU 104 displays images on the screen of the monitor 21 in accordance with instructions from the processor 101. The monitor 21 may be an organic electro luminescence (EL) display device, a liquid crystal display device, or another.

A keyboard 22 and a mouse 23 are connected to the input interface 105. The input interface 105 transmits signals received from the keyboard 22 and the mouse 23 to the processor 101. The mouse 23 is an example of a pointing device, and other pointing devices may be used. Other pointing devices include a touch panel, a tablet, a touch pad, and a track ball.

The optical drive device 106 reads data recorded on an optical disc 24 or writes data to the optical disc 24 using laser light or the like. The optical disc 24 is a portable storage medium on which data is recorded so as to be readable by reflection of light. The optical disc 24 may be a digital versatile disc (DVD), a DVD-RAM, a compact disc read only memory (CD-ROM), a CD-recordable (CD-R), CD-rewritable (CD-RW), or another.

The device connection interface 107 is a communication interface for connecting peripheral devices to the classical computer 100. For example, a memory device 25 and a memory reader-writer 26 may be connected to the device connection interface 107. The memory device 25 is a storage medium having a function of communicating with the device connection interface 107. The memory reader-writer 26 is a device that writes data to a memory card 27 or reads data from the memory card 27. The memory card 27 is a card-type storage medium.

The network interface 108 is connected to the network 20. The network interface 108 transmits and receives data to and from other computers or communication devices via the network 20. For example, the network interface 108 is a wired communication interface connected to a wired communication device such as a switch or a router via a cable. Alternatively, the network interface 108 may be a wireless communication interface communicatively connected to a wireless communication device such as a base station or an access point by radio waves.

The quantum computer 200 shares the bus 109 with the classical computer 100. The quantum computer 200 is able to perform information communication with each element of the classical computer 100 via the bus 109.

The quantum computer 200 includes a quantum processing device 201 connected to the bus 109. The quantum processing device 201 performs gate operations on qubits according to the quantum gates included in a quantum circuit and measures the states of the qubits. The quantum processing device 201 includes a qubit device 202 and a qubit control signal generator 203. The qubit device 202 holds the states of a plurality of qubits and performs gate operations on the qubits. The qubit control signal generator 203 generates control signals for instructing gate operations or measurements on the qubits.

The quantum computing system 30 implements the processing functions of the second embodiment with the hardware described above. The information processing apparatus 10 described in the first embodiment may also be implemented with the same hardware as the quantum computing system 30 illustrated in FIG. 3.

The classical computer 100 implements the processing functions of the second embodiment by executing programs recorded on a computer-readable storage medium, for example. The programs describing the processing contents to be executed by the classical computer 100 may be recorded on various storage media. For example, a program to be executed by the classical computer 100 may be stored in the storage device 103. The processor 101 loads at least part of the program from the storage device 103 into the memory 102 and executes the program. The program to be executed by the classical computer 100 may be recorded on a portable storage medium such as the optical disc 24, the memory device 25, or the memory card 27. The program stored in the portable storage medium becomes executable after being installed in the storage device 103 under the control of the processor 101, for example. Alternatively, the processor 101 may read the program directly from the portable storage medium and execute the program.

Next, an outline of error correction in quantum computation and usefulness of the STAR architecture will be described.

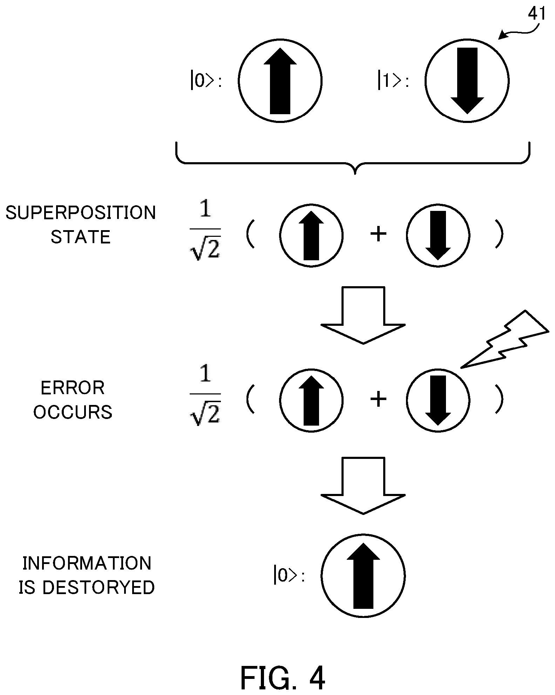

FIG. 4 illustrates the characteristics of a qubit. A qubit 41, which is the minimum unit of information in the quantum computer 200, exists in a state of $|0\rangle$ or $|1\rangle$ or in a superposition state of both. In the superposition state, the probabilities of measuring the qubit 41 in the states of $|0\rangle$ and $|1\rangle$ are obtained. For example, in the case where the states of $|0\rangle$ and $|1\rangle$ have equal probabilities, the superposition state of the qubit 41 is expressed as "$2^{-1/2}(|0\rangle + |1\rangle)$".

Such information of the qubit 41 is destroyed (an error occurs) due to interactions with the environment, operational errors, and others. For example, if the superposition state is destroyed by an error, the state of the qubit 41 may collapse to a state such as 10). In order to improve the computational accuracy, it is demanded to detect qubits with errors and correct the states of the qubits to correct states.

To meet the demand, a technique called quantum error correction has been proposed. In the quantum error correction, a qubit is encoded using a plurality of physical qubits. When encoding is performed, the states of one or more logical qubits are represented by a plurality of physical qubits used for the encoding. Qubits in which errors have occurred are detected and corrected based on the collective state of the plurality of encoded qubits.

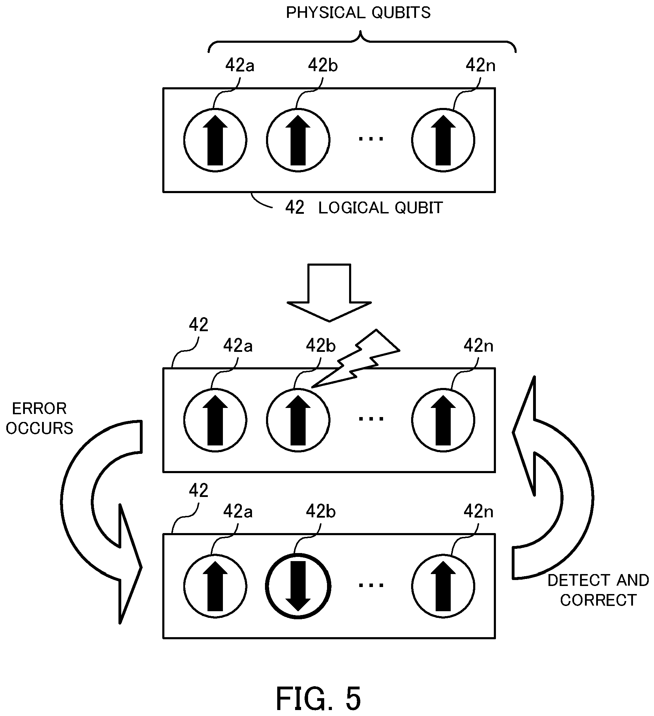

FIG. 5 illustrates an example of the quantum error correction. As illustrated in FIG. 5, a logical qubit 42 is defined by a plurality of physical qubits 42a, 42b, $\cdots$, and 42n. The example of FIG. 5 assumes that, when all the plurality of physical qubits 42a, 42b, $\cdots$, and 42n are in the state of "$|0\rangle$", an error occurs and the physical qubit 42b is flipped to the state of "11)".

In this case, the error is detected based on information obtained from the states of the plurality of physical qubits 42a, 42b, ···, and 42n. Then, the physical qubit 42b in which the error has occurred is identified, and the state of the physical qubit 42b is corrected.

By appropriately performing the quantum error correction in this way, even if errors occur in physical qubits, the logical qubit 42 is able to maintain the correct state, as long as the number of errors is within a tolerance limit. Quantum computation involving quantum error correction for a logical qubit is achieved by combining predetermined basic gates.

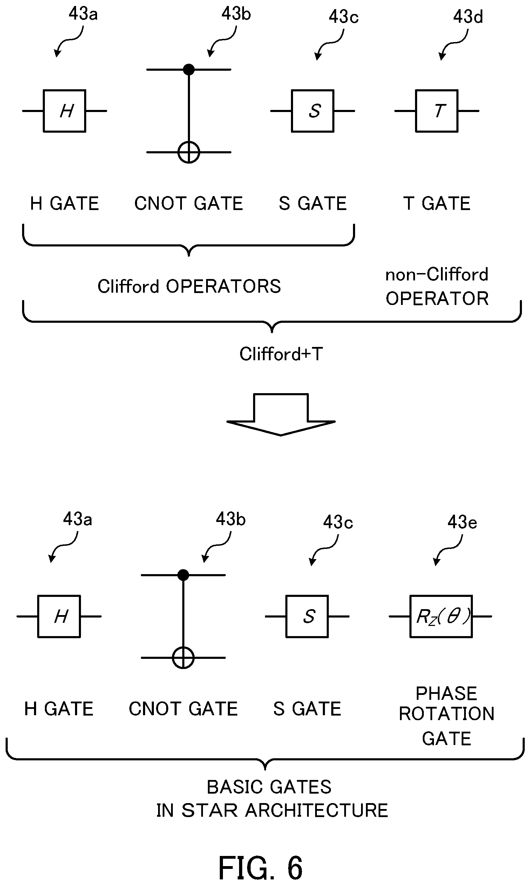

FIG. 6 illustrates an example of basic gates used in fault-tolerant quantum computation. Basic gates used in quantum computation involving quantum error correction are the H gate 43a, the CNOT gate 43b, the S gate 43c, and the T gate 43d. The H gate 43a is referred to as a Hadamard gate and is a quantum gate that rotates the state by 180 degrees around an axis that is 45 degrees between the Z axis and the X axis. The CNOT gate 43b is a quantum gate that keeps the state of the target bit unchanged if the control bit is in the state of "10)" and that flips the state of the target qubit if the control bit is in the state of "|1)". The S gate 43c is a quantum gate that rotates the state by $\pi/2$ around the Z axis. The T gate 43d is a quantum gate that rotates the state by $\pi/4$ around the Z axis.

Among these gates, the H gate 43a, the CNOT gate 43b, and the S gate 43c are called Clifford operators. On the other hand, the T gate 43d is called a non-Clifford operator. These basic gates are collectively referred to as Clifford+T gates. The Clifford+T gates in the computation by the quantum computer 200 corresponds to AND, XOR, and NOT in the classical computer 100. That is, it is possible to execute various kinds of quantum computations by combining the Clifford+T quantum gates.

In fault-tolerant quantum computation using the Clifford+T gates, one million or more physical qubits are typically used to execute useful computations. A large proportion (e.g., 90% or more) of the huge number of physical qubits are used for arbitrary-angle rotations of logical qubits. Arbitrary-angle rotations involve gate operations using a large number of T gates 43d. In addition, a large number of physical qubits are used for error correction of the T gates 43d (which results in a high error correction cost). This is a major factor that increases the number of physical qubits for realizing FTQC.

Moreover, in most cases, an arbitrary-angle rotation is achieved by repeating the gate operation of the T gate 43d about several tens of times. Therefore, the use of the T gate 43d for arbitrary-angle rotations reduces the execution efficiency of the quantum circuit.

To address this, the STAR architecture uses a phase rotation gate 43e as a basic gate instead of the T gate 43d of the Clifford+T gates. The phase rotation gate 43e in the STAR architecture is implemented with a gate teleportation circuit using a predetermined ancilla state "$|m_\theta\rangle_L$". The ancilla state may be called a resource state.

The state "$|m_\theta\rangle$" is defined as "$|m_\theta\rangle = R_Z(\theta)|+\rangle = 2^{-1/2}(e^{-i\theta/2}|0\rangle + e^{+i\theta/2}|1\rangle)$", where $\theta$ is an arbitrary rotation angle. The subscript L in the ancilla state "$|m_\theta\rangle_L$" indicates that the state is represented by a redundant logical qubit. Hereinafter, similarly, the subscript L is added to the states of logical qubits.

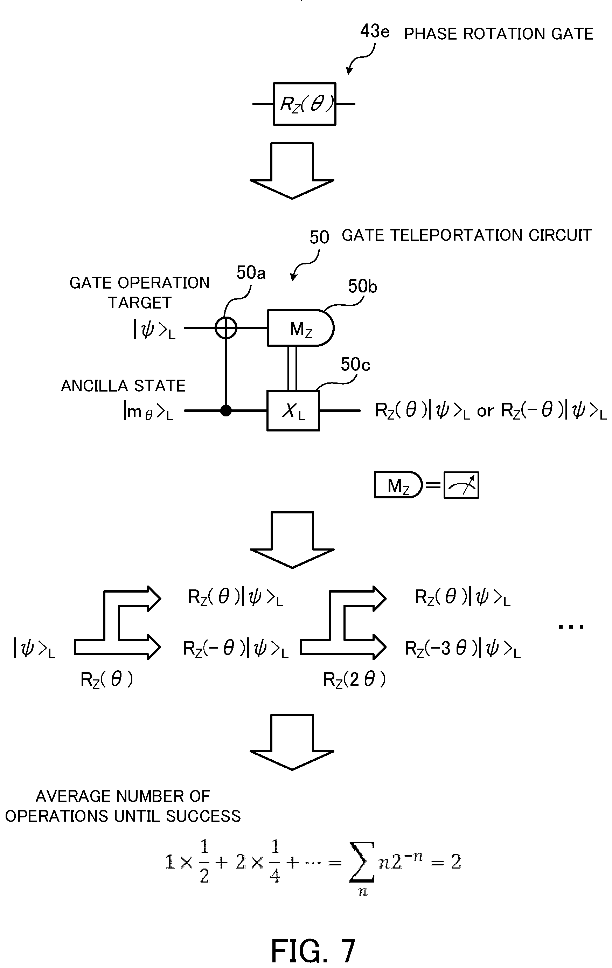

FIG. 7 illustrates an example of a quantum circuit that performs a gate operation for an arbitrary rotation. A gate teleportation circuit 50 is a quantum circuit that performs a rotation by an angle $\theta$ ($R_Z(\theta)$). The gate teleportation circuit 50 has two inputs: an operation target state "$|\psi\rangle_L$" as a first qubit and an ancilla state "$|m_\theta\rangle_L$" as a second qubit.

In the gate teleportation circuit 50, the gate operation of a CNOT gate 50a is first performed with the second qubit as the control bit and the first qubit as the target bit. Then, a measurement 50b of the first qubit is performed. If the measurement result is "-1", the gate operation of an X gate 50c is performed on the second qubit.

When the measurement result of the first qubit is "+1", the state of the second qubit is "$R_Z(\theta)|\psi\rangle_L$". When the measurement result of the first qubit is "-1", the state of the second qubit is "Rz(-8) $|\psi\rangle_L$". Thus, after the gate operation for an arbitrary rotation by the gate teleportation circuit 50, the obtained result indicates either "$R_Z(8)|\psi\rangle_L$" or "$R_Z(-\theta)|\psi\rangle_L$". That is, the output state stochastically indicates an inverse rotation. The probability that the output state is "$R_Z(\theta)|\psi\rangle_L$" and the probability that the output state is "$R_Z(-\theta)|\psi\rangle_L$" are each "1/2".

Since the output state of the gate teleportation circuit 50 stochastically indicates a target rotation (forward rotation) or an inverse rotation, the quantum computing system 30 repeatedly performs the same gate operation until the target rotation is obtained.

For example, if a gate operation for a rotation by the target angle $\theta$ fails and results in an inverse rotation ($-\theta$), the quantum computing system 30 executes a rotation by an angle $2\theta$ in the gate operation for the next rotation. If the gate operation for the rotation by the angle $2\theta$ also fails and results in an inverse rotation ($-2\theta$), it means that the total angle of the two rotations is $-3\theta$. In this case, the quantum computing system 30 executes, for example, a rotation by an angle $4\theta$ in the gate operation for the next rotation.

Assuming that the probability that a rotation succeeds and the probability that a rotation fails are each 1/2, the average number of rotation operations until success is "$1 \times (1/2) + 2 \times (1/4) + \cdots = \Sigma_n n2^{-n} = 2$". That is, the quantum computing system 30 is able to achieve an arbitrary rotation by executing the gate operation of the gate teleportation circuit 50 twice on average.

The ancilla state "$|m_\theta\rangle_L$" is used as an input to the gate teleportation circuit 50. Therefore, a generation process of the ancilla state "$|m_\theta\rangle_L$" is performed before the execution of the gate teleportation. The accuracy of the generated ancilla state "$|m_\theta\rangle_L$" affects the accuracy of the entire arbitrary rotation.

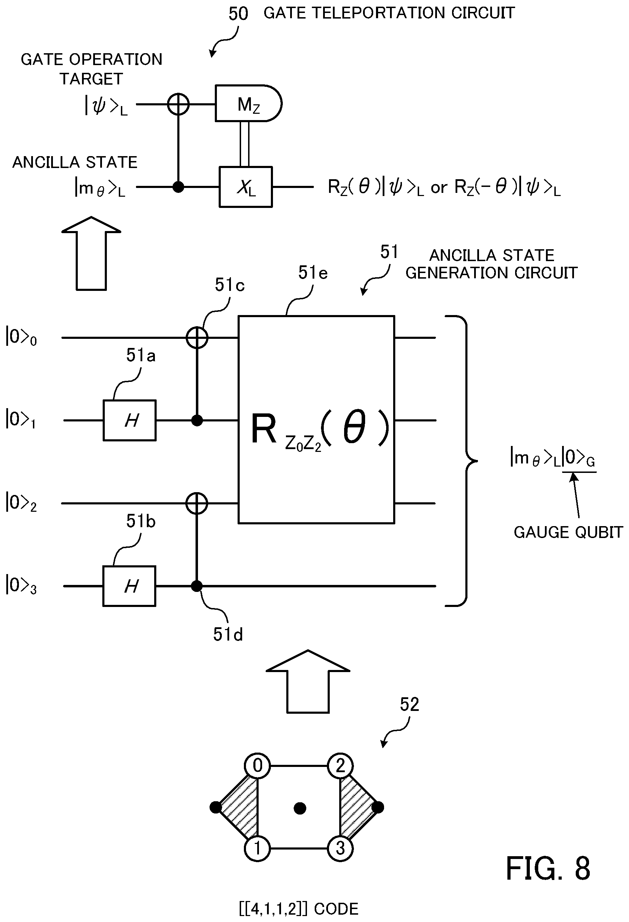

FIG. 8 illustrates an example of a quantum circuit for preparing an ancilla state. The ancilla state "$|m_\theta\rangle_L$" that is input to the gate teleportation circuit 50 is generated by applying an error correction code called a [[4,1,1,2]] code 52.

In general, each parameter in a [[n,k,r,d]] code has the following meaning.

n: The number of physical qubits used for encoding
k: The number of logical qubits in the code
r: The number of gauge qubits in the code
d: The code distance of the code

The gauge qubit is independent of the logical qubit and refers to a quantum state indicating a (redundant) degree of freedom (gauge degree of freedom) that is not used in computation.

The [[4,1,1,2]] code 52 is a code having one logical qubit and one gauge qubit. The use of the [[4,1,1,2]] code 52 enables efficient error detection by utilizing the gauge degree of freedom of the gauge qubit (see the aforementioned literature). By collectively indicating the logical qubit and the gauge qubit, the [[4,1,1,2]] code 52 may be written as a [[4,2,2]] code.

The states of the four physical qubits input to an ancilla state generation circuit 51 are all "$|0\rangle$". In the ancilla state generation circuit 51, first, the gate operations of H gates 51a and 51b are performed on the second and fourth physical qubits among the four physical qubits. Next, the gate operation of a CNOT gate 51c is performed with the second physical qubit as the control qubit and the first physical qubit as the target qubit. At the same time, the gate operation of a CNOT gate 51d is performed with the fourth physical qubit as the control qubit and the third physical qubit as the target qubit. Then, a two-qubit rotation gate 51e around the Z-axis is applied to the first physical qubit and the third physical qubit.

The operation of the two-qubit rotation gate 51e is "$R_{Z0Z2}(\theta) = e^{-i(1/2)\theta Z0Z2}$" (the number following Z is a subscript of Z indicating a qubit to be operated). The operation of the two-qubit rotation gate 51e is expressed by a matrix as Formula (1) (the subscript indicating a qubit to be operated is omitted).

$$R_{ZZ}(\theta) = exp\left(-i\frac{\theta}{2}ZZ\right) = \begin{pmatrix} e^{-i\frac{\theta}{2}} & 0 & 0 & 0 \\ 0 & e^{i\frac{\theta}{2}} & 0 & 0 \\ 0 & 0 & e^{i\frac{\theta}{2}} & 0 \\ 0 & 0 & 0 & e^{-i\frac{\theta}{2}} \end{pmatrix} \tag{1}$$

The two-qubit rotation gate 51e expressed by Formula (1) is easily executed in the quantum computer 200. For example, the two-qubit rotation gate 51e is implemented using the XX rotation gate $R_{XX}(\theta)$ and the H gate in an ion-trap quantum computer. The two-qubit rotation gate 51e is also implemented using, for example, the cross-resonance gate $R_{ZX}(\theta)$ and the H gate in a superconducting quantum computer. Even when these computers are not available, the two-qubit rotation gate 51e may be implemented by combining the CNOT gate and the RZ gate ($R_Z(\theta)$). The output of the ancilla state generation circuit 51 is used as an encoded ancilla state "$|m_\theta\rangle_L$".

When no error occurs, the ancilla state generation circuit 51 generates a state "$|m_\theta\rangle_L|0\rangle_G$" encoded by the [[4,1,1,2]] code 52. Here, "$|m_\theta\rangle_L$" is the state of the logical qubit, and "$|0\rangle_G$" is the state of the gauge qubit.

As now described, the output of the ancilla state generation circuit 51 has two degrees of freedom: the logical qubit and the gauge qubit. The state of the logical qubit is usable as an ancilla state for the gate teleportation circuit 50, whereas the state of the gauge qubit is usable for error detection.

The generated ancilla state in the encoded state undergoes an arbitrary-rotation gate operation. That is, the ancilla state undergoes the arbitrary rotation without going through a decoded form, which prevents an increase in the error rate that would occur if the state were decoded.

The generated ancilla state "$|m_\theta\rangle_L$" is subjected to error detection by the [[4,1,1,2]] code 52. When an error is detected, the generated ancilla state "$|m_\theta\rangle_L$" is discarded, and an ancilla state "$|m_\theta\rangle_L$" is generated again. This makes it possible to generate an ancilla state with as few errors as possible.

In the error detection of the ancilla state "$|m_\theta\rangle_L$", the eigenvalues of the following stabilizer operators are measured. A stabilizer operator is an operator that defines an error correction code, and an error location is estimated from information obtained by measuring these operators.

$$S_Z = Z_0 Z_1 Z_2 Z_3$$

$$S_X = X_0X_1X_2X_3$$

The subscripts on the right-hand side are the serial numbers of physical qubits indicating the state of the logical qubit in the [[4,1,1,2]] code 52. In the case where an error is absent, the stabilizer operators "$S_Z$" and "$S_X$" are both "+1". Therefore, the presence or absence of an error is determined by checking the values of the stabilizer operators "$S_Z$" and "$S_X$".

The eigenvalue of each stabilizer operator is decomposed into the product of the eigenvalues of gauge operators.

$$S_Z = (Z_0Z_1)(Z_2Z_3)$$

$$S_X = (X_0X_2)(X_1X_3)$$

$(Z_0Z_1)$ and $(Z_2Z_3)$ are gauge Z operators, and $(X_0X_2)$ and $(X_1X_3)$ are gauge X operators. The gauge operators are measured by an error detection circuit using measurement qubits (also called ancilla qubits).

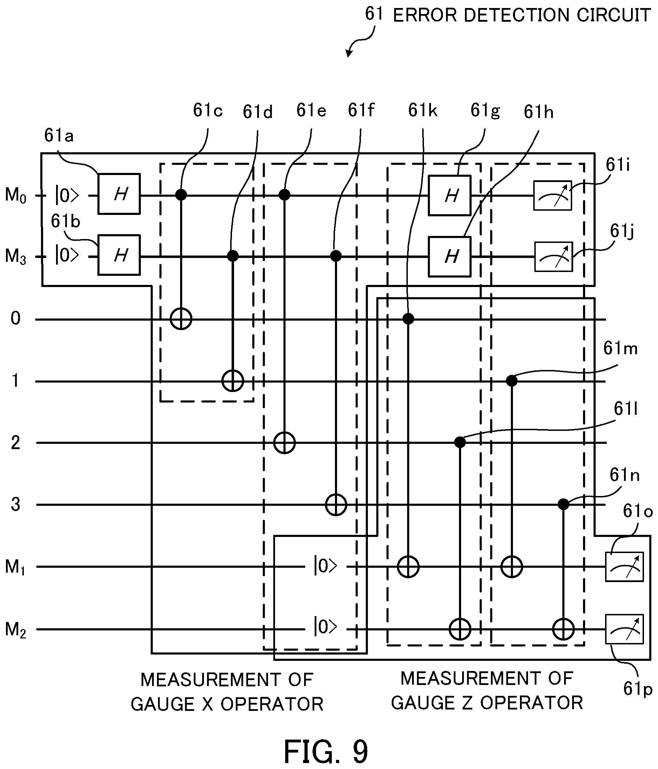

FIG. 9 illustrates an example of the error detection circuit. An error detection circuit 61 uses four measurement qubits "$M_0$, $M_1$, $M_2$, and $M_3$" in addition to four physical qubits (qubit numbers are "0, 1, 2, and 3") indicating the state of a logical qubit. The initial states of the measurement qubits "$M_0$, $M_1$, $M_2$, and $M_3$" are "10)". The gauge X operators are measured using the measurement qubits "$M_0$ and $M_3$". The gauge Z operators are measured using the measurement qubits "$M_1$ and $M_2$". In FIG. 9, elements indicating quantum gates or measurement that are simultaneously executable are enclosed by a dashed line frame.

The gauge X operators are measured as follows. First, the gate operations of Hadamard gates 61a and 61b are performed on the measurement qubits "$M_0$ and $M_3$", respectively. Next, the gate operation of a CNOT gate 61c is performed with the measurement qubit "$M_0$" as the control qubit and the physical qubit with qubit number "0" as the target qubit. Next, the gate operation of a CNOT gate 61d is performed with the measurement qubit "$M_3$" as the control qubit and the physical qubit with qubit number "1" as the target qubit. Next, the gate operation of a CNOT gate 61e is performed with the measurement qubit "$M_0$" as the control qubit and the physical qubit with qubit number "2" as the target qubit. Next, the gate operation of a CNOT gate 61f is performed with the measurement qubit "$M_3$" as the control qubit and the physical qubit with qubit number "3" as the target qubit. Lastly, the gate operations of Hadamard gates 61g and 61h are performed on the measurement qubits "$M_0$" and "$M_3$", respectively.

After the above gate operations, measurements 61i and 61j (measurements in the Z basis) of the measurement qubits "$M_0$ and $M_3$" are performed. The measurement result of the measurement qubit "$M_0$" corresponds to the gauge X operator $(X_0X_2)$. The measurement result of the measurement qubit "$M_3$" corresponds to the gauge X operator $(X_1X_3)$. The product of the eigenvalues of these two gauge operators is the eigenvalue "Sx" of the stabilizer operator.

The gauge Z operators are measured as follows. First, the gate operation of a CNOT gate 61k is performed with the physical qubit with qubit number "0" as the control qubit and the measurement qubit "$M_1$" as the target qubit. Next, the gate operation of a CNOT gate 61l is performed with the physical qubit with qubit number "2" as the control qubit and the measurement qubit "$M_2$" as the target qubit. Next, the gate operation of a CNOT gate 61m is performed with the physical qubit with qubit number "1" as the control qubit and the measurement qubit "$M_1$" as the target qubit. Lastly, the gate operation of a CNOT gate 61n is performed with the physical qubit with qubit number "3" as the control qubit and the measurement qubit "$M_2$" as the target qubit.

After the above gate operations, measurements 61o and 61p (measurements in the Z basis) of the measurement qubits "$M_1$ and $M_2$" are performed. The measurement result of the measurement qubit "$M_0$" corresponds to the gauge Z operator $(Z_0Z_1)$. The measurement result of the measurement qubit "$M_3$" corresponds to the gauge Z operator $(Z_2Z_3)$.

By causing the quantum computer 200 to execute the error detection circuit 61, it is possible to perform error detection without affecting the state of the logical qubit for ancilla state generation. The product of the eigenvalues of these two gauge operators is the eigenvalue "$S_Z$" of the stabilizer operator.

By performing the error detection using the error detection circuit 61, it is possible to suppress errors generated during the gate operations of the error detection circuit 61 and to perform the processing at high speed. In the error detection circuit 61 as illustrated in FIG. 9, most errors are removed, but it is not possible to remove some errors.

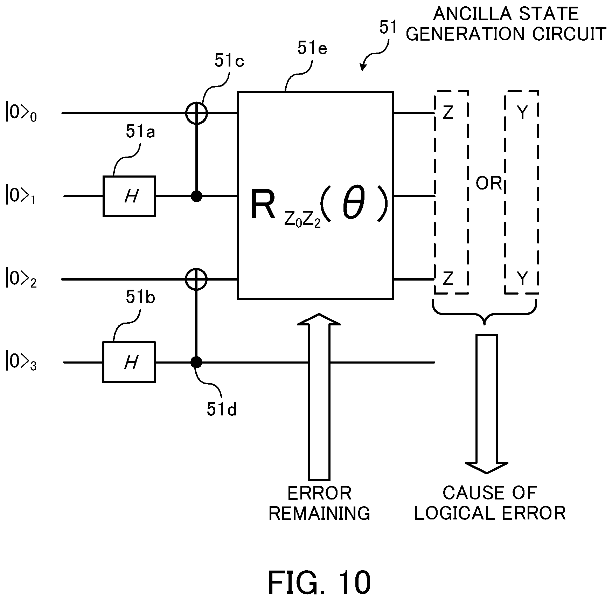

FIG. 10 illustrates an example of an error that is difficult to remove. An example of the error that is difficult to remove is an error that occurs at the time of the gate operation of the two-qubit rotation gate 51e in the ancilla state generation circuit 51. Errors remaining in the two-qubit rotation gate 51e directly lead to an error in the phase rotation gate 43e. The error in the phase rotation gate 43e greatly affects the error rate of the entire quantum computation.

For example, consider a circuit-level noise model. The circuit-level noise model is a model in which an error occurs in every gate operation including initialization, gate operation, and measurement, and is widely used as a realistic model for performance verification of quantum error correction. In the error detection circuit 61 illustrated in FIG. 9, a ZZ error and a YY error that occur immediately after the gate operation of the two-qubit rotation gate 51e are undetectable.

Therefore, the ZZ error and the YY error cause a logical error.

In the circuit-level noise model, the ZZ error rate and the YY error rate are each p/15 (p denotes the error rate of each quantum gate). The main term of a logical error rate based on the ZZ error and the YY error is 2p/15. The main term here is a term having the greatest contribution to the overall logical error rate. Z errors that occur independently at two locations may lead to a logical error. However, the contribution of such errors has the order of $p^2$ and is therefore smaller than that of the ZZ error or the YY error.

Therefore, the effect of the ZZ error or the YY error will be considered.

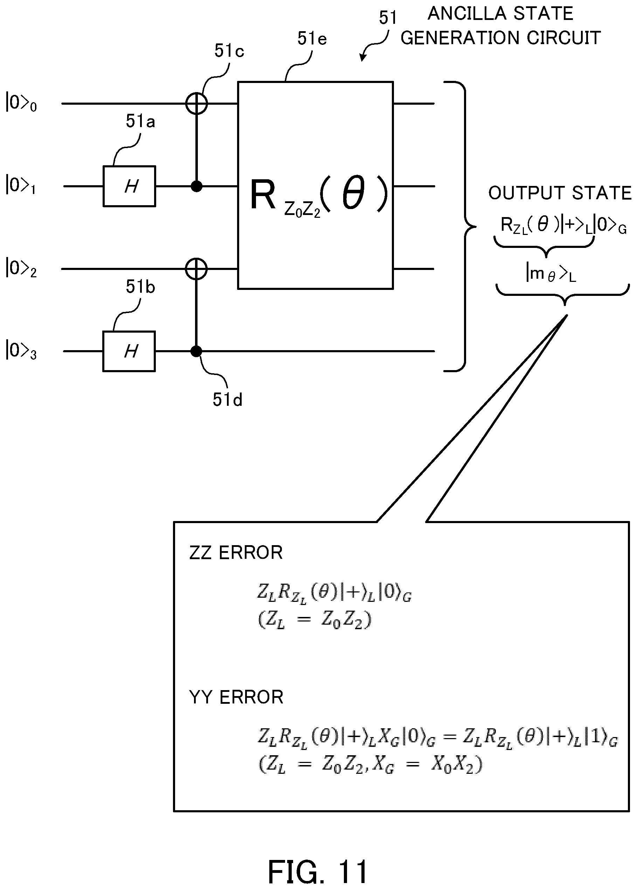

FIG. 11 illustrates an example of an output state of the ancilla state generation circuit. The ancilla state "$|m_\theta\rangle_L$" included in the output state of the ancilla state generation circuit 51 is a state obtained by applying a logical phase rotation gate "$R_{ZL}(\theta)$" to a logical $|+\rangle$ state. The gauge qubit included in the output state is independent of the ancilla state, and is "$|0\rangle_G$" if an error is absent.

The Z gate operation of the logical qubit representing the ancilla state is "$Z_L = Z_0Z_2$", and the X gate operation of the gauge qubit is "$X_G = X_0X_2$". "$Z_0$" is a measurement value in the Z basis of the physical qubit with qubit number "0". "$Z_2$" is a measurement value in the Z basis of the physical qubit with qubit number "2". "$X_0$" is a measurement value in the X basis of the physical qubit with qubit number "0". "$X_2$" is a measurement value in the X basis of the physical qubit with qubit number "2".

Here, in the case where a ZZ error occurs, "$Z_L$" acts on the logical qubit, so that the output state is represented by Formula (2).

$$Z_L R_{Z_L}(\theta)|+\rangle_L|0\rangle_G \Rightarrow Z_L R_{Z_L}(\theta)|+\rangle_L|0\rangle_G \qquad (2)$$

In the case where a YY error occurs, "$Z_L$" acts on the logical qubit, and "$X_G$" acts on the gauge qubit. As a result, the output state is given by the left-hand side of Formula (3).

$$Z_L R_{Z_L}(\theta)|+\rangle_L X_G|0\rangle_G \Rightarrow Z_L R_{Z_L}(\theta)|+\rangle_L|1\rangle_G \qquad (3)$$

The output state in the case where the YY error has occurred is convertible as given by the right-hand side of Formula (3). As described above, the state of the gauge qubit is not flipped even when the ZZ error occurs. However, the state of the gauge qubit is flipped from "$|0\rangle_G$" to "$|1\rangle_G$" when the YY error occurs. Therefore, the YY error is detectable if the flipped state of the gauge qubit is correctly measured.

The following describes a change in the state of the gauge qubit in the case where the error detection circuit 61 illustrated in FIG. 9 is executed.

Pauli operators that change the state of a qubit are given by the following Formulas (4) to (6).

$$X \equiv \begin{bmatrix} 0 & 1 \\ 1 & 0 \end{bmatrix} \qquad (4)$$

$$Y \equiv \begin{bmatrix} 0 & -i \\ i & 0 \end{bmatrix} \qquad (5)$$

$$Z \equiv \begin{bmatrix} 1 & 0 \\ 0 & -1 \end{bmatrix} \qquad (6)$$

Formula (4) is an X operator representing the gate operation of an X gate. Formula (5) is a Y operator representing the gate operation of a Y gate. Formula (6) is a Z operator representing the gate operation of a Z gate. These Pauli operators have properties of "XY = -YX", "YZ = -ZY", "ZX = -XZ", and "$X^2 = Y^2 = Z^2 = I$" (I is an identity operator).

The states "$|0\rangle$" and "$|1\rangle$" are the $\pm 1$ eigenvectors of the Z operator. These are given by the following formulas.

$$Z|0\rangle = +|0\rangle \qquad (7)$$

$$Z|1\rangle = -|1\rangle \qquad (8)$$

The states "|+⟩" and "|-⟩" are the ±1 eigenvectors of the X operator. These are given by the following formulas.

$$X|+\rangle = +|+\rangle \qquad (9)$$

$$X|-\rangle = -|-\rangle \qquad (10)$$

The states "|0)" and "|1)" are represented using "|+⟩" and "|-⟩" as follows.

$$|0\rangle = \frac{1}{\sqrt{2}}(|+\rangle + |-\rangle) \qquad (11)$$

$$|1\rangle = \frac{1}{\sqrt{2}}(|+\rangle - |-\rangle) \qquad (12)$$

The states "|+⟩" and "|-⟩" are represented using "|0)" and "|1)" as follows.

$$|+\rangle = \frac{1}{\sqrt{2}}(|0\rangle + |1\rangle) \qquad (13)$$

$$|-\rangle = \frac{1}{\sqrt{2}}(|0\rangle - |1\rangle) \qquad (14)$$

The following describes the difference in the behavior of a qubit in either state "|0⟩" or "|1⟩" between a case of performing Z measurement (projection measurement in the Z basis) and a case of performing X measurement (projection measurement in the X basis).

First, the case of performing the Z measurement will be described. As seen in Formulas (7) and (8), "|0⟩" and "11)" are the eigenstates of the Z operator. Therefore, when the Z measurement is performed, the eigenvalue corresponding to the state is measured with a probability of 100% ("+1" when the state is "|0)" and "-1" when the state is "|1⟩"). That is, by checking a measured eigenvalue, it is possible to determine whether the state is "|0⟩" or "|1⟩".

Next, the case of performing the X measurement will be described. As seen in Formulas (11) and (12), "|0)" and "11)" are both superposition states of the eigenstates "|+⟩" and "|-⟩" of the X operator with equal weights. Therefore, regardless of whether the state is "|0⟩" or "|1⟩", the eigenvalues "+1" and "-1" are each measured with a probability of 50%. That is, it is not possible to determine from a measurement result whether the state is "|0⟩" or "|1⟩".

As described above, it is possible to determine whether the state is "|0⟩" or "|1⟩" in the Z measurement, but it is not possible to determine whether the state is "|0⟩" or "|1⟩" in the X measurement. Also for the gauge qubit, it is possible to check whether the state is "|0⟩" or "|1)" by measuring the eigenvalues of the gauge Z operators.

When a measurement is performed, the state of a qubit may change or may remain unchanged. The following describes what state a qubit in the state of "|0)" or "|1⟩" will be in after a measurement.

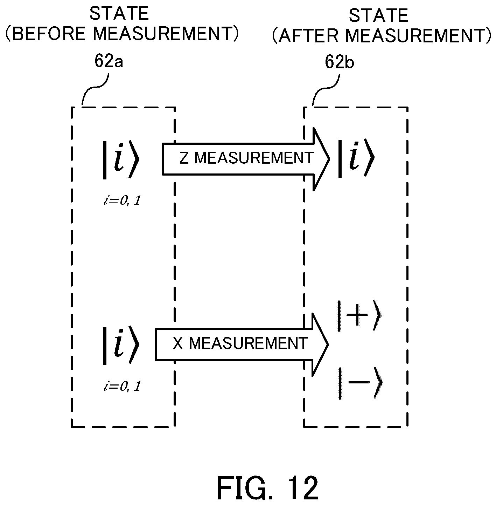

FIG. 12 illustrates an example of state changes caused by measurements. A state 62a before the measurement of a qubit to be measured is "|i⟩" (i = 0, 1). Consider the case where a Z measurement is performed on the qubit in the state 62a. Since "|0)" and "|1)" are the eigenstates of the Z operator, the state of the qubit remains unchanged before and after the measurement. Therefore, the state 62b after the measurement is "|i⟩". That is, the state is not destroyed by the Z measurement.

On the other hand, consider the case where a Z measurement is performed on the qubit in the state 62a. "|0)" and "|1)" are superposition states of the eigenstates "|+⟩" and "|-⟩" of the X operator with equal weights. Therefore, the state 62b after the measurement is either "|+⟩" or "|-⟩" in a measurement result. That is, the original state is destroyed by the X measurement.

The state "|0⟩_G" of the gauge qubit is the eigenstate of the eigenvalue "+1" of the gauge Z operator. When the state of the gauge qubit is measured by the gauge X operator, as in the case of performing the X measurement of "|0)" and "|1⟩",

the measurement value is randomly determined regardless of whether the state is "$|0\rangle_G$" or "$|1\rangle_G$". Therefore, the measurement value is not usable to determine whether a YY error has occurred.

Moreover, if the measurement of the gauge X operators is performed before the measurement of the gauge Z operators, as in the error detection circuit 61 illustrated in FIG. 9, the original state is destroyed as a result of the measurement of the gauge X operators, so that the state of the gauge qubit changes to "$|+\rangle_G$" or "$|-\rangle_G$". Therefore, even if the measurement of the gauge Z operators is performed after the measurement of the gauge X operators, as in the error detection circuit 61, the state of the gauge qubit is already destroyed at the time of the measurement of the gauge Z operators. Thus, a YY error is not detectable.

The quantum computing system 30 uses an improved error detection circuit to enable the detection of a YY error.

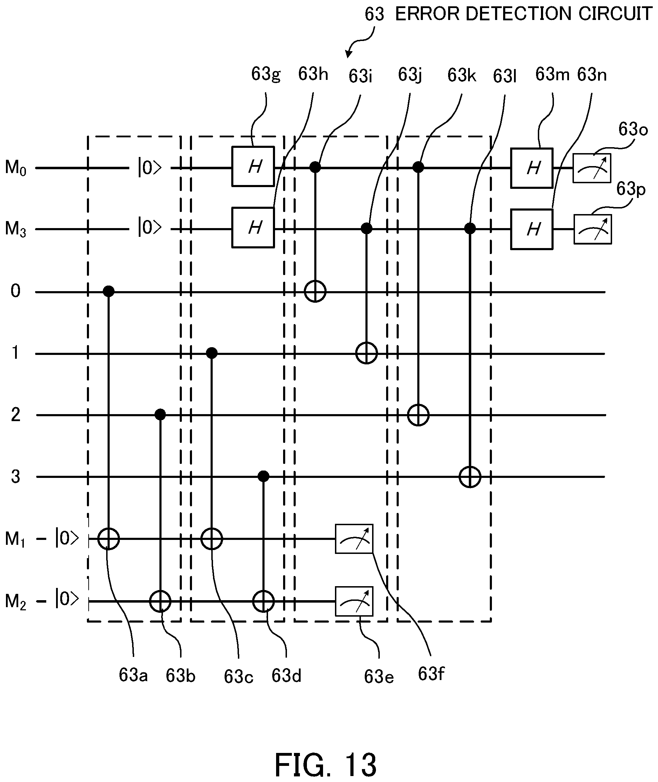

FIG. 13 illustrates an example of an error detection circuit capable of detecting a YY error. The error detection circuit 63 uses four measurement qubits "$M_0$, $M_1$, $M_2$, and $M_3$" in addition to four physical qubits (qubit numbers are "0, 1, 2, and 3") indicating the state of a logical qubit. The initial states of the measurement qubits "$M_0$, $M_1$, $M_2$, and $M_3$" are "$|0\rangle$". The measurement of the gauge X operator is performed using the measurement qubits "$M_0$ and $M_3$". The measurement of the gauge Z operators is performed using the measurement qubits "$M_1$ and $M_2$". In FIG. 13, elements indicating quantum gates or measurements that are simultaneously executable are enclosed by a dashed line frame.

The error detection circuit 63 performs the measurement of the gauge X operators after the measurement of the gauge Z operators. The gauge Z operators are measured as follows. First, the gate operation of a CNOT gate 63a is performed with the physical qubit with qubit number "0" as the control qubit and the measurement qubit "$M_1$" as the target qubit. Next, the gate operation of a CNOT gate 63b is performed with the physical qubit with qubit number "2" as the control qubit and the measurement qubit "$M_2$" as the target qubit. Next, the gate operation of a CNOT gate 63c is performed with the physical qubit with qubit number "1" as the control qubit and the measurement qubit "$M_1$" as the target qubit. Lastly, the gate operation of a CNOT gate 63d is performed with the physical qubit with qubit number "3" as the control qubit and the measurement qubit "$M_2$" as the target qubit.

After these gate operations, measurements 63e and 63f (measurements in the Z basis) are performed on the measurement qubits "$M_1$ and $M_2$". The measurement result of the measurement qubit "$M_1$" corresponds to the gauge Z operator ($Z_0Z_1$). The measurement result of the measurement qubit "$M_2$" corresponds to the gauge Z operator ($Z_2Z_3$). The product of the eigenvalues of these two gauge Z operators is the eigenvalue "$S_Z$" of the Z stabilizer operator.

The gauge X operators are measured as follows. First, the gate operations of Hadamard gates 63g and 63h are performed on the measurement qubits "$M_0$" and "$M_3$", respectively. Next, the gate operation of a CNOT gate 63i is performed with the measurement qubit "$M_0$" as the control qubit and the physical qubit with qubit number "0" as the target qubit. Next, the gate operation of a CNOT gate 63j is performed with the measurement qubit "$M_3$" as the control qubit and the physical qubit with qubit number "1" as the target qubit. Next, the gate operation of a CNOT gate 63k is performed with the measurement qubit "$M_0$" as the control qubit and the physical qubit with qubit number "2" as the target qubit. Next, the gate operation of a CNOT gate 63l is performed with the measurement qubit "$M_3$" as the control qubit and the physical qubit with qubit number "3" as the target qubit. Lastly, the gate operations of Hadamard gates 63m and 63n are performed on the measurement qubits "$M_0$" and "$M_3$", respectively.

After these gate operations, measurements 63o and 63p (measurements in the Z basis) are performed on the measurement qubits "$M_0$ and $M_3$". The measurement result of the measurement qubit "$M_0$" corresponds to the gauge X operator ($X_0X_2$). The measurement result of the measurement qubit "$M_3$" corresponds to the gauge X operator ($X_1X_3$). The product of the eigenvalues of these two gauge X operators is the eigenvalue "$S_X$" of the X stabilizer operator.

In the error detection circuit 63, the last gate operation in the measurement of the gauge Z operators performed using the physical qubits indicating the state of the logical qubit is the CNOT gate 63d. The first gate operation in the measurement of the gauge X operators performed using the physical qubits indicating the state of the logical qubit is the CNOT gate 63i. The gate operation of the CNOT gate 63i is performed after the gate operation of the CNOT gate 63d. That is, in the error detection circuit 63, the measurement of the gauge Z operators is performed before the measurement of the gauge X operators.

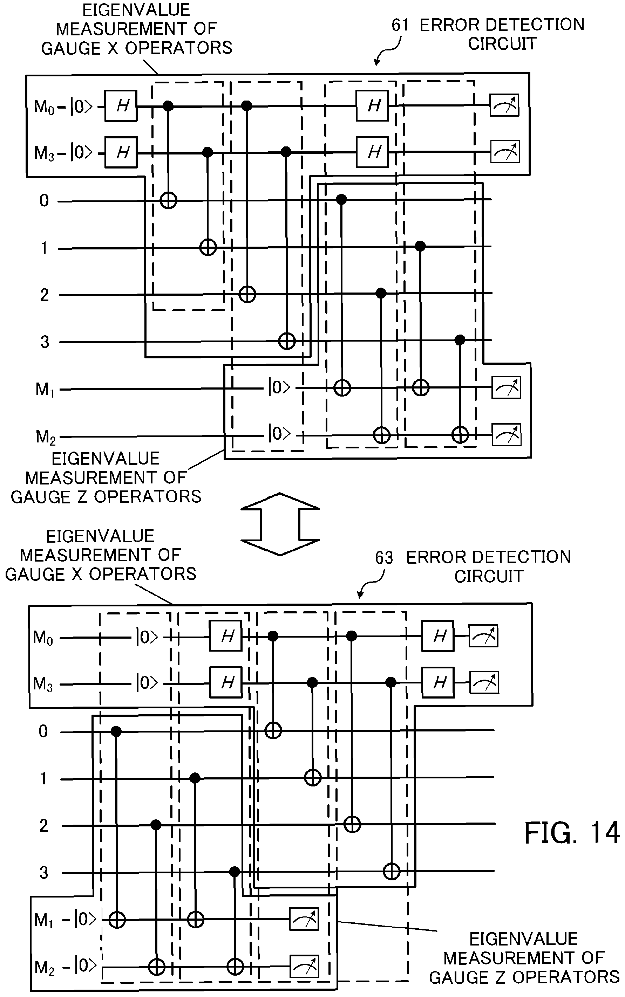

FIG. 14 illustrates a comparison example in the measurement order of the eigenvalues of gauge operators between error detection circuits. In the error detection circuit 61, the measurement of the eigenvalues of the gauge X operators is performed first, and then the measurement of the eigenvalues of the gauge Z operators is performed. In this measurement order, the state of the gauge qubit is destroyed by the measurement of the eigenvalues of the gauge X operators. Therefore, it is not possible to detect the state of the gauge qubit in the measurement of the eigenvalues of the gauge Z operators.

On the other hand, in the error detection circuit 63, the measurement of the eigenvalues of the gauge Z operators is performed first, and then the measurement of the eigenvalues of the gauge X operators is performed. Accordingly, in the measurement of the eigenvalues of the gauge Z operators, it is possible to detect whether the gauge qubit immediately after the execution of the ancilla state generation circuit 51 has been bit-flipped.

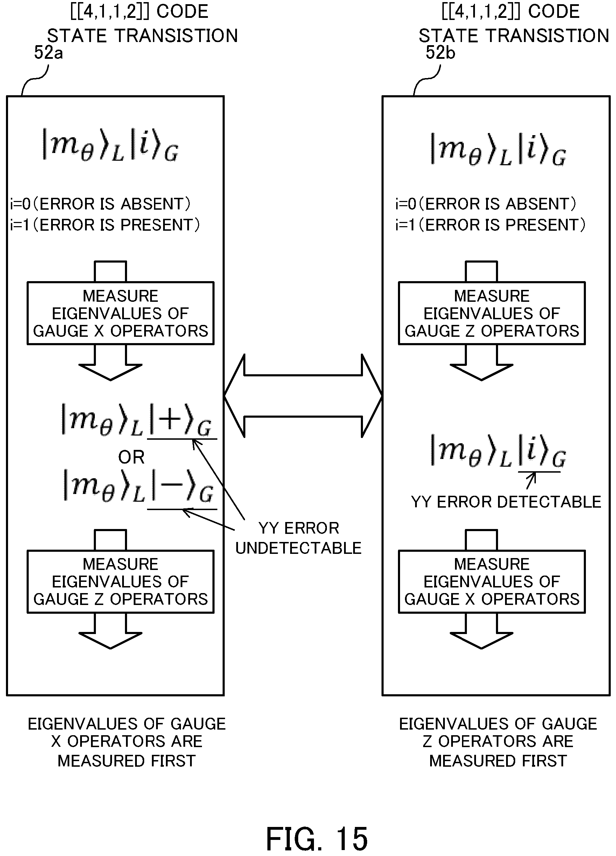

FIG. 15 illustrates an example of state changes of the **[[4,1,1,2]]** code according to the measurement orders of gauge operators. FIG. 15 illustrates changes in the state of the [[4,1,1,2]] code 52 in the case where the eigenvalues of the gauge X operators are measured first and in the case where the eigenvalues of the gauge Z operators are measured first.

A [[4,1,1,2]] code state transition 52a indicates a state transition of the [[4,1,1,2]] code 52 in the case where the eigenvalues of the gauge X operators are measured first (the error detection circuit 61 illustrated in FIG. 9 is executed).

The state of the [[4,1,1,2]] code 52 immediately after the execution of the ancilla state generation circuit 51 is "$|m_\theta\rangle_L|i\rangle_G$". If an YY error is absent, "i = 0". If a YY error is present, "i = 1".

In the case where the eigenvalues of the gauge X operators are measured first, the state of the [[4,1,1,2]] code 52 is either "$|m_\theta\rangle_L|+\rangle_G$" or "$|m_\theta\rangle_L|-\rangle_G$" with a probability of 1/2. Which state is obtained does not depend on the state immediately after the execution of the ancilla state generation circuit 51. That is, regardless of whether the gauge qubit is first "$|0\rangle_G$" or "$|1\rangle_G$", a measurement value of "+1" or "-1" is randomly obtained with a probability of 50%. Therefore, in the eigenvalue measurement of the gauge X operators, it is not possible to obtain information on whether a YY error has occurred (whether the gauge qubit is first "$|0\rangle_G$" or "$|1\rangle_G$"). Further, since the state is changed by the eigenvalue measurement of the gauge X operators (error information is lost), it is also not possible to obtain information indicating whether a YY error has occurred, in the subsequent eigenvalue measurement of the gauge Z operators.

A [[4,1,1,2]] code state transition 52b indicates a state transition of the [[4,1,1,2]] code 52 in the case where the eigenvalues of the gauge Z operators are measured first (the error detection circuit 63 illustrated in FIG. 13 is executed).

In the case where the eigenvalues of the gauge Z operators are measured first, the state of the [[4,1,1,2]] code 52 remains "$|m_\theta\rangle_L|i\rangle_G$". On the basis of the state after the eigenvalue measurement of the gauge Z operators at this time, it is possible to determine whether the gauge degree of freedom has a bit flip in the state immediately after the execution of the ancilla state generation circuit 51 (whether the gauge qubit is first "$|0\rangle_G$" or "$|1\rangle_G$"). That is, it is possible to obtain information indicating whether a YY error has occurred, without destroying the information.

Next, a flow for detecting errors including the YY error will be described.

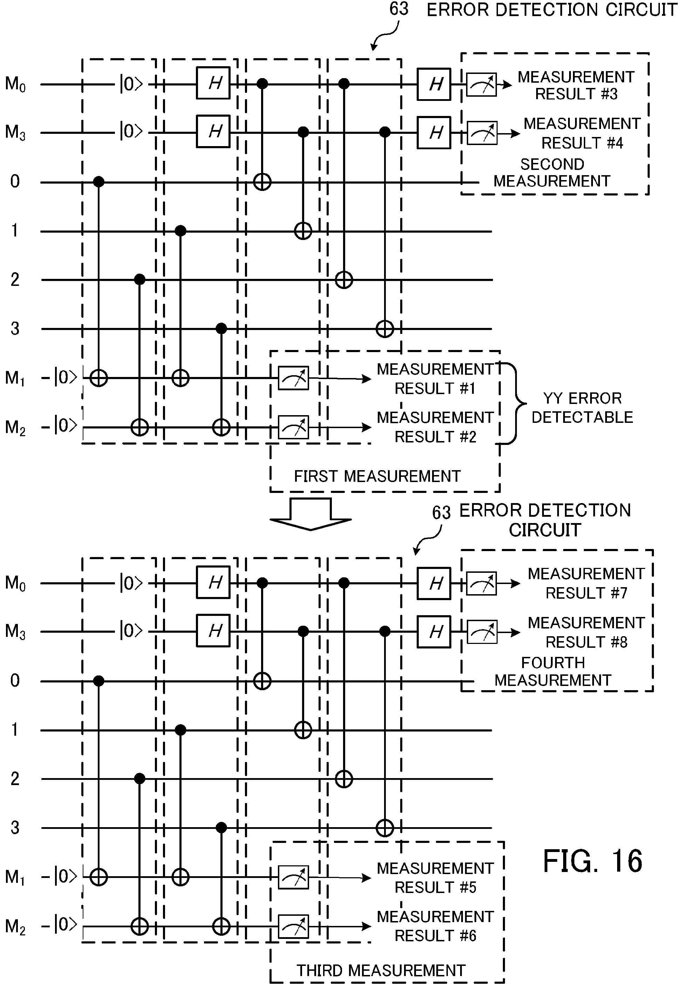

FIG. 16 illustrates an example of error detection. The error detection circuit 63 is executed twice. In the first execution of the error detection circuit 63, a first measurement and a second measurement are performed. In the second execution of the error detection circuit 63, a third measurement and a fourth measurement are performed.

In the first measurement, the states of the measurement qubits $M_1$ and $M_2$ are measured. The measurement result (measurement result #1) of the state of the measurement qubit $M_1$ at this time indicates the eigenvalue of a gauge degree of freedom. Similarly, the measurement result (measurement result #2) of the state of the measurement qubit $M_2$ indicates the eigenvalue of a gauge degree of freedom. The measurement result #1 and the measurement result #2 are both "+1" if a YY error is absent. If the measurement result #1 or the measurement result #2 is "-1", a YY error is detected.

"Measurement result #1 × measurement result #2" indicates a Z stabilizer eigenvalue "$S_{Z,0}$". The Z stabilizer eigenvalue "$S_{Z,0}$" is "+1" if an error is absent. If the Z stabilizer eigenvalue "$S_{Z,0}$" is "-1", an error is detected.

In the second measurement, the states of the measurement qubits $M_0$ and $M_3$ are measured. The product of the measurement result (measurement result #3) of the state of the measurement qubit $M_0$ and the measurement result (measurement result #4) of the state of the measurement qubit $M_3$ at this time indicates an X stabilizer eigenvalue "$S_{X,0}$". The X stabilizer eigenvalue "$S_{X,0}$" is "+1" if an error is absent. If the X stabilizer eigenvalue "$S_{X,0}$" is "-1", an error is detected.

In the third measurement, the states of the measurement qubits $M_1$ and $M_2$ are measured. The product of the measurement result (measurement result #5) of the state of the measurement qubit $M_1$ and the measurement result (measurement result #6) of the state of the measurement qubit $M_2$ at this time indicates a Z stabilizer eigenvalue "$S_{Z,1}$". The product "$S_{Z,0} \times S_{Z,1}$" of the Z stabilizer eigenvalues obtained in the first measurement and the third measurement indicates a Z stabilizer eigenvalue difference. The Z stabilizer eigenvalue difference "$S_{Z,0} \times S_{Z,1}$" is "+1" if an error is absent. If the Z stabilizer eigenvalue difference "$S_{Z,0} \times S_{Z,1}$" is "-1", an error is detected.

In the fourth measurement, the states of the measurement qubits $M_0$ and $M_3$ are measured. The product of the measurement result (measurement result #7) of the state of the measurement qubit $M_0$ and the measurement result (measurement result #8) of the state of the measurement qubit $M_3$ at this time indicates an X stabilizer eigenvalue "$S_{X,1}$". The product "$S_{X,0} \times S_{X,1}$" of the X stabilizer eigenvalues obtained in the second measurement and the fourth measurement indicates an X stabilizer eigenvalue difference. The X stabilizer eigenvalue difference "$S_{X,0} \times S_{X,1}$" is "+1" if an error is absent. If the X stabilizer eigenvalue difference "$S_{X,0} \times S_{X,1}$" is "-1", an error is detected.

If an error is detected by executing the error detection circuit 63, the generation of an ancilla state using the ancilla state generation circuit 51 is performed again. If the error detection process is passed without an error detected, the [[4,1,1,2]] code 52 is expanded to a surface code with code distance used in the gate teleportation circuit 50.

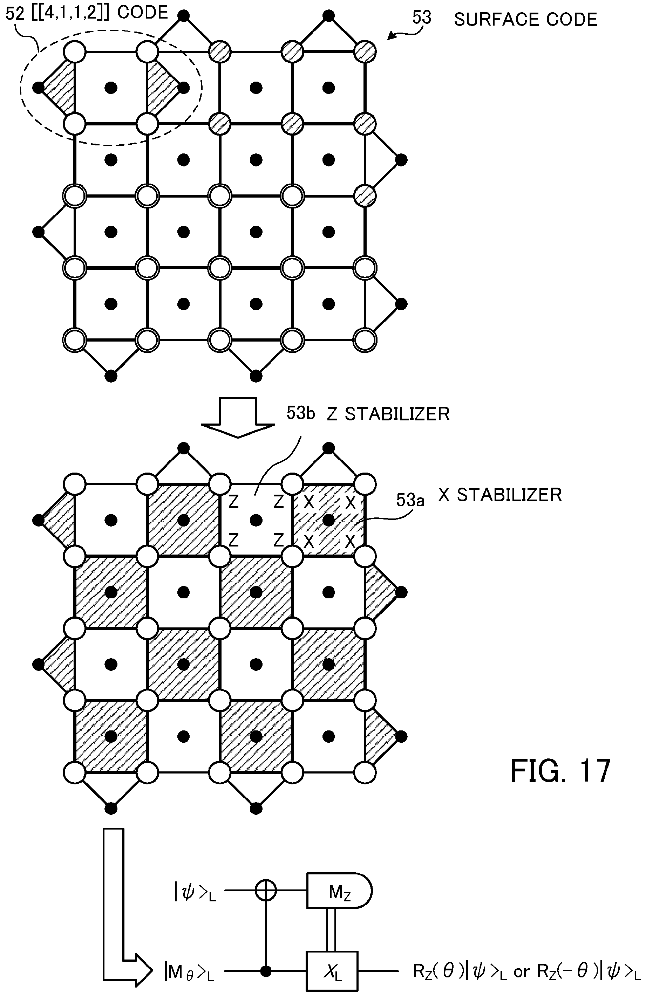

FIG. 17 illustrates an example of expansion to a surface code. A surface code 53 is obtained by expanding the [[4,1,1,2]] code 52 to a code distance "5" (d = 5). The state prepared by the [[4,1,1,2]] code 52 is set at the upper left of the surface code 53. The other physical qubits are initialized to "$|0\rangle$" or "$|+\rangle$". In the surface code 53, hatched circles represent physical qubits initialized to "$|+\rangle$", and double circles represent physical qubits initialized to "$|0\rangle$".

The state indicated by the [[4,1,1,2]] code 52 includes a logical qubit representing an ancilla state and a gauge qubit. However, the gauge degree of freedom disappears due to the expansion of the [[4,1,1,2]] code 52 to the surface code 53. As a result, the state of the surface code 53 represents the ancilla state "$|m_\theta\rangle_L$".

The quantum computing system 30 performs stabilizer measurements on the surface code 53. Error locations are estimated based on information obtained by measuring stabilizers. In the surface code 53, X stabilizers 53a are defined on hatched lattice faces, and Z stabilizers 53b are defined on white lattice faces.

The quantum computing system 30 performs error detection based on the measurement results of the stabilizers. When an error is detected, the quantum computing system 30 discards the generated ancilla state and performs the ancilla state generation process again. By doing so, it is possible to generate an ancilla state with as few errors as possible.

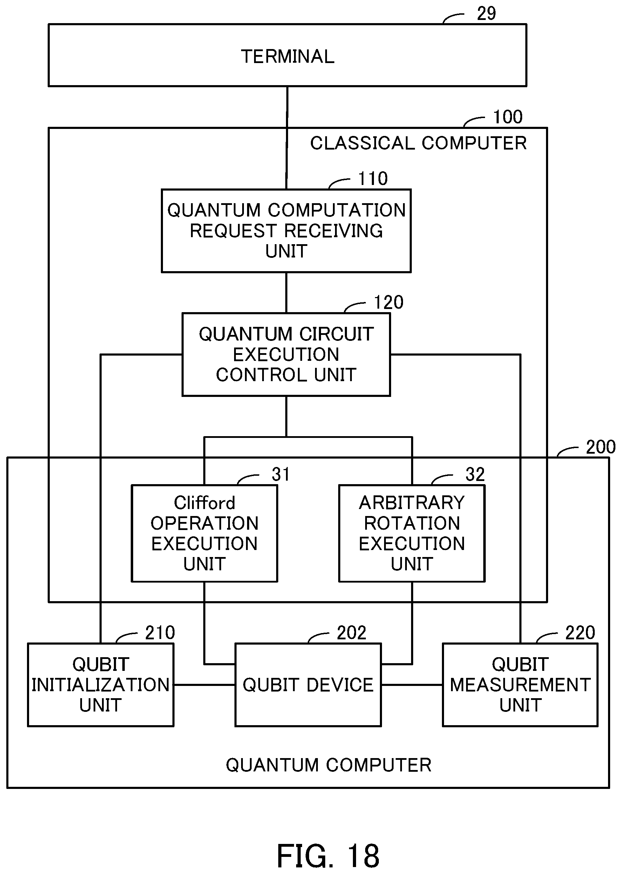

FIG. 18 is a block diagram illustrating an example of functions for quantum computation in the quantum computing system. The classical computer 100 includes a quantum computation request receiving unit 110 and a quantum circuit execution control unit 120. The quantum computer 200 includes a qubit initialization unit 210 and a qubit measurement unit 220. Functions implemented by the cooperation of the classical computer 100 and the quantum computer 200 include a Clifford operation execution unit 31 and an arbitrary rotation execution unit 32.

The quantum computation request receiving unit 110 receives a quantum computation request from the terminal 29. The quantum computation request includes, for example, a quantum circuit corresponding to a problem to be solved. The quantum computation request receiving unit 110 transmits, to the quantum circuit execution control unit 120, an execution command for the quantum circuit corresponding to the problem to be solved, indicated by the quantum computation request. When the quantum computation request receiving unit 110 receives the result of the quantum computation based on the quantum circuit from the quantum circuit execution control unit 120, the quantum computation request receiving unit 110 transmits the computation result to the terminal 29.

The quantum circuit execution control unit 120 transmits an execution command for each quantum gate to the quantum computer 200 in the order indicated by the quantum circuit obtained as an execution target. When the quantum circuit execution control unit 120 receives, from the quantum computer 200, a measurement result indicating the states of the qubits after the gate operations based on the quantum circuit, the quantum circuit execution control unit 120 computes a solution to the problem to be solved on the basis of the measurement result. Then, the quantum circuit execution control unit 120 transmits the solution to the problem to be solved to the quantum computation request receiving unit 110 as the result of the quantum computation.

The qubit initialization unit 210 initializes a logical qubit in accordance with a command from the quantum circuit execution control unit 120. For example, the qubit initialization unit 210 initializes the physical qubits constituting the logical qubit in the qubit device 202 to predetermined states.

The qubit measurement unit 220 measures the state of the logical qubit. For example, the qubit measurement unit 220 measures the states of the physical qubits constituting the logical qubit, and determines the state of the logical qubit on the basis of the measurement result. The qubit measurement unit 220 transmits the measured state of the logical qubit to the classical computer 100.

The Clifford operation execution unit 31 performs Clifford operations on the logical qubit and is implemented by the classical computer 100 and the quantum computer 200 cooperating with each other. For example, the quantum computer 200 performs the gate operations of the quantum gates corresponding to the Clifford operations on the physical qubits constituting the logical qubit. Then, the Clifford operation execution unit 31 performs the syndrome measurement of the operated physical qubits. The Clifford operation execution unit 31 detects an error on the basis of the result of the syndrome measurement. In the case where an error is detected, the Clifford operation execution unit 31 identifies an error location, performs a gate operation on the physical qubit at the error location, and corrects the error.

Among the functions of the Clifford operation execution unit 31, the error detection and the error location identification are performed by the classical computer 100. The gate operations of the quantum gates corresponding to the Clifford operations, the syndrome measurement, and the error correction are performed by the quantum computer 200.

The arbitrary rotation execution unit 32 performs the gate operation of an arbitrary rotation on the logical qubit and is implemented by the classical computer 100 and the quantum computer 200 cooperating with each other.

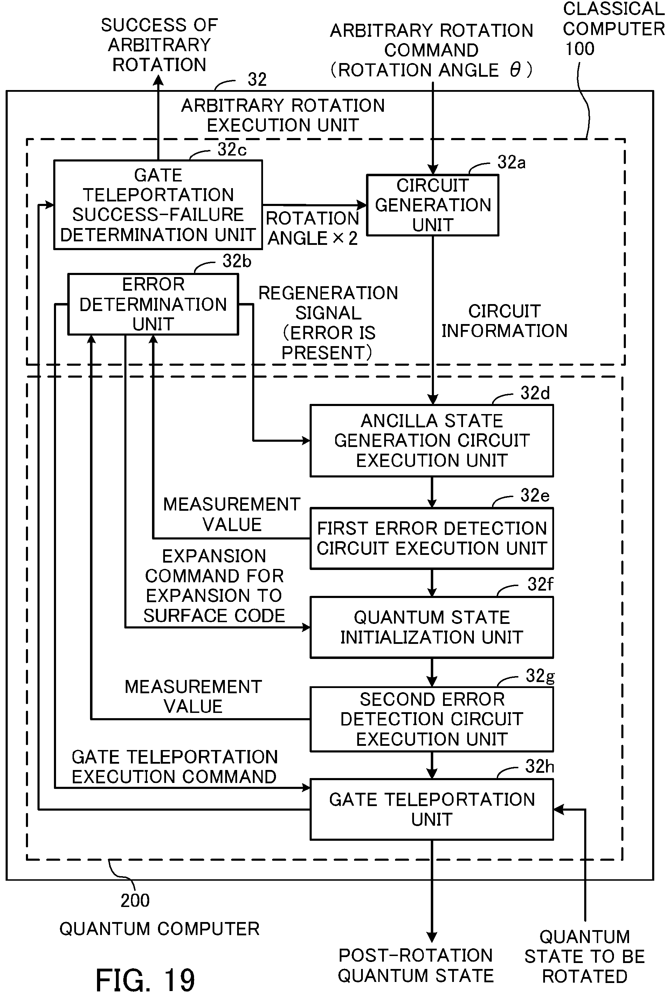

FIG. 19 is a block diagram illustrating an example of functions of the arbitrary rotation execution unit. The functions of the arbitrary rotation execution unit 32 implemented by the classical computer 100 include a circuit generation unit 32a, an error determination unit 32b, and a gate teleportation success-failure determination unit 32c.

The circuit generation unit 32a generates an ancilla state generation circuit and an error detection circuit for detecting an error in an ancilla state in accordance with an arbitrary rotation command. The arbitrary rotation command is sent from, for example, the quantum circuit execution control unit 120. The arbitrary rotation command designates a rotation angle $\theta$. The circuit generation unit 32a generates an ancilla state generation circuit for a rotation with the designated rotation angle $\theta$. The circuit generation unit 32a transmits circuit information indicating the generated ancilla state generation circuit and an error detection circuit to an ancilla state generation circuit execution unit 32d.

In addition, when the circuit generation unit 32a receives, from the gate teleportation success-failure determination unit 32c, an instruction to perform a rotation again, with a double rotation angle this time, the circuit generation unit 32a generates an ancilla state generation circuit for the rotation with the double rotation angle. Then, the circuit generation unit 32a transmits circuit information indicating the newly generated ancilla state generation circuit and the error detection circuit for detecting an error in an ancilla state, to the ancilla state generation circuit execution unit 32d.

The error determination unit 32b obtains a measurement value obtained by executing the error detection circuit from a first error detection circuit execution unit 32e. The error determination unit 32b determines the presence or absence of various errors including a YY error on the basis of the received measurement value. When an error is present in the measurement value received from the first error detection circuit execution unit 32e, the error determination unit 32b transmits a regeneration signal of an ancilla state to the ancilla state generation circuit execution unit 32d. When an error is absent in the measurement value received from the first error detection circuit execution unit 32e, the error determination unit 32b transmits an expansion command for expansion to a surface code to a quantum state initialization unit 32f.

In addition, the error determination unit 32b receives a measurement value obtained by executing an error detection circuit from a second error detection circuit execution unit 32g. The error determination unit 32b determines the presence or absence of an error in the expanded surface code on the basis of the received measurement value. When an error is present in the measurement value received from the second error detection circuit execution unit 32g, the error determination unit 32b transmits a regeneration signal of an ancilla state to the ancilla state generation circuit execution unit 32d. When an error is absent in the measurement value received from the second error detection circuit execution unit 32g, the error determination unit 32b transmits a gate teleportation execution command to a gate teleportation unit 32h.

The gate teleportation success-failure determination unit 32c determines the success or failure of an arbitrary rotation of a logical qubit. For example, the gate teleportation success-failure determination unit 32c determines that the arbitrary rotation is successful when the phase of the logical qubit, which serves as the operation target, has been rotated in the forward direction as a result of the gate teleportation unit 32h executing the gate teleportation circuit 50. When the arbitrary rotation is successful, the gate teleportation success-failure determination unit 32c notifies the quantum circuit execution control unit 120 of the success of the arbitrary rotation. When the arbitrary rotation fails (inverse rotation), the gate teleportation success-failure determination unit 32c instructs the circuit generation unit 32a to perform a rotation again, with a double rotation angle this time.

The functions of the arbitrary rotation execution unit 32 implemented by the quantum computer 200 include the ancilla state generation circuit execution unit 32d, the first error detection circuit execution unit 32e, the quantum state initialization unit 32f, the second error detection circuit execution unit 32g, and the gate teleportation unit 32h.

The ancilla state generation circuit execution unit 32d executes an ancilla state generation circuit based on circuit information received from the circuit generation unit 32a. For example, the ancilla state generation circuit execution unit 32d sequentially performs the gate operations of quantum gates defined by the ancilla state generation circuit on the logical qubit encoded by the [[4,1,1,2]] code 52.

The first error detection circuit execution unit 32e executes an error detection circuit on the logical qubit operated by the ancilla state generation circuit execution unit 32d. For example, the first error detection circuit execution unit 32e executes the error detection circuit 63 illustrated in FIG. 13. The first error detection circuit execution unit 32e transmits the measurement value obtained by executing the error detection circuit to the error determination unit 32b.

When the quantum state initialization unit 32f receives an expansion command for expansion to a surface code, the quantum state initialization unit 32f initializes the physical qubits in the region of the surface code with predetermined code distance so that the [[4,1,1,2]] code 52 becomes the surface code. For example, the quantum state initialization unit 32f initializes the states of the physical qubits included in the surface code 53 so as to obtain the surface code 53 illustrated in FIG. 17. As a result, the logical qubit representing the ancilla state is expanded from the [[4,1,1,2]] code 52 to the surface code.

The second error detection circuit execution unit 32g executes an error detection circuit for detecting an error in the expanded surface code. The second error detection circuit execution unit 32g transmits a measurement value obtained by executing the error detection circuit to the error determination unit 32b.

Upon receiving a gate teleportation execution command, the gate teleportation unit 32h executes the gate teleportation circuit 50 using the generated ancilla state and the quantum state of the logical qubit to be rotated as inputs. The output state of the gate teleportation circuit 50 is a post-rotation quantum state.

Next, a processing procedure of the classical computer 100 for causing the quantum computer 200 to execute quantum computation using a phase rotation gate with few errors will be described in detail.

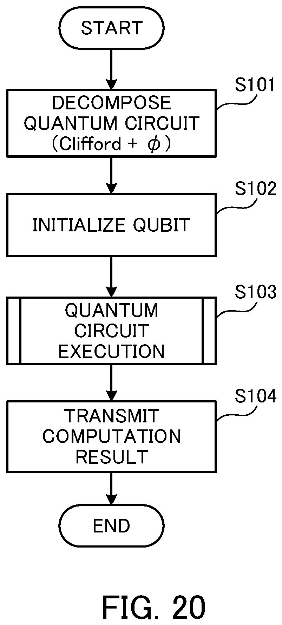

FIG. 20 is a flowchart illustrating an example procedure for quantum computation in the classical computer. Hereinafter, the process illustrated in FIG. 20 will be described in order of step numbers.

[Step S101] When the quantum computation request receiving unit 110 receives a quantum computation request from the terminal 29, the quantum computation request receiving unit 110 decomposes a quantum gate (for example, a three-qubit gate) in a quantum circuit to be executed into a quantum circuit in which quantum gates of "Clifford+φ (arbitrary rotation)" are combined.

[Step S102] The quantum circuit execution control unit 120 performs an initialization process on a logical qubit. For example, the quantum circuit execution control unit 120 identifies physical qubits to be used for the execution of the quantum circuit, and transmits an initialization command for the physical qubits to the qubit initialization unit 210 of the quantum computer 200. In accordance with the initialization command, the qubit initialization unit 210 initializes the states of the physical qubits to predetermined states.

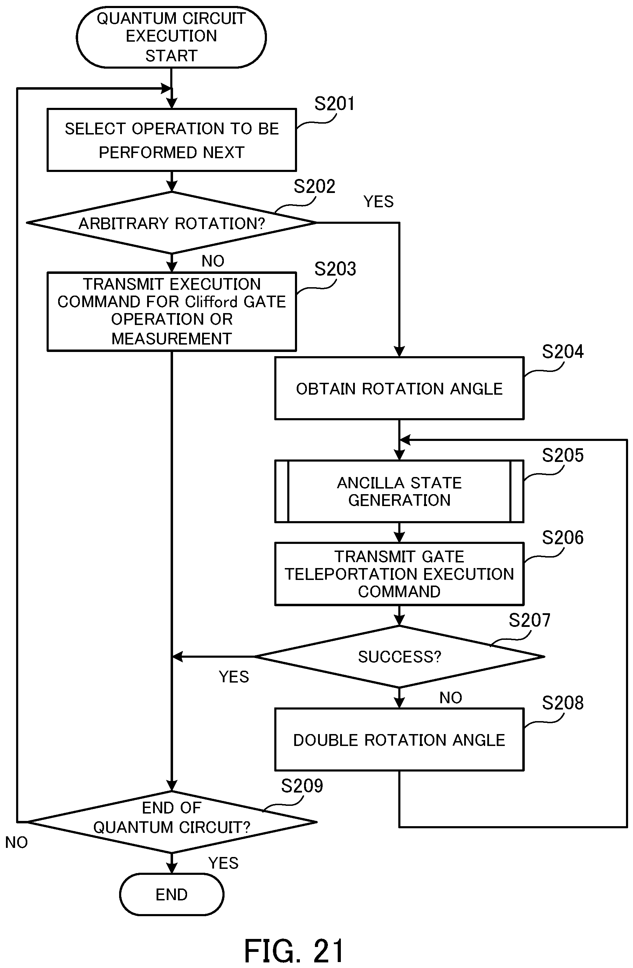

[Step S103] When the quantum circuit execution control unit 120 receives a response indicating the initialization completion from the qubit initialization unit 210, the quantum circuit execution control unit 120 performs a quantum circuit execution process. Details of the quantum circuit execution process will be described later (see FIG. 21).

[Step S104] When receiving the measurement result of the final state of the logical qubit after the execution of the quantum circuit is complete, the quantum circuit execution control unit 120 computes a solution to the problem to be solved on the basis of the measurement result. Then, the quantum circuit execution control unit 120 transmits the computation result to the quantum calculation request receiving unit 110. The quantum computation request receiving unit 110 transmits the computation result to the terminal 29.

The quantum computation using the quantum circuit is executed in this way. Next, the quantum circuit execution process will be described in detail.

FIG. 21 is a flowchart illustrating an example procedure for the quantum circuit execution process. Hereinafter, the process illustrated in FIG. 21 will be described in order of step numbers.

[Step S201] The quantum circuit execution control unit 120 selects an operation (gate operation or measurement) to be performed next from a quantum circuit.

[Step S202] The quantum circuit execution control unit 120 determines whether the selected operation is the gate operation of an arbitrary-rotation quantum gate. If the selected operation is the gate operation of a Clifford gate or measurement, the quantum circuit execution control unit 120 advances the process to step S203. If the selected operation is the gate operation of an arbitrary-rotation quantum gate, the quantum circuit execution control unit 120 advances the process to step S204.

[Step S203] The quantum circuit execution control unit 120 transmits, to the quantum computer 200, an execution command for the gate operation of the Clifford gate or the measurement to be executed next. If the transmitted command is a gate operation execution command for the Clifford gate, the Clifford operation execution unit 31 in the quantum computer 200 performs the gate operation of the Clifford gate on the logical qubit. If the transmitted command is a measurement execution command, the qubit measurement unit 220 measures the states of the physical qubits constituting the logical qubit. The qubit measurement unit 220 transmits the measurement result to the quantum circuit execution control unit 120. Thereafter, the quantum circuit execution control unit 120 advances the process to step S209.

[Step S204] The quantum circuit execution control unit 120 obtains a rotation angle for the selected gate operation of the arbitrary-rotation quantum gate. The quantum circuit execution control unit 120 transmits an arbitrary rotation command designating the rotation angle to the arbitrary rotation execution unit 32.

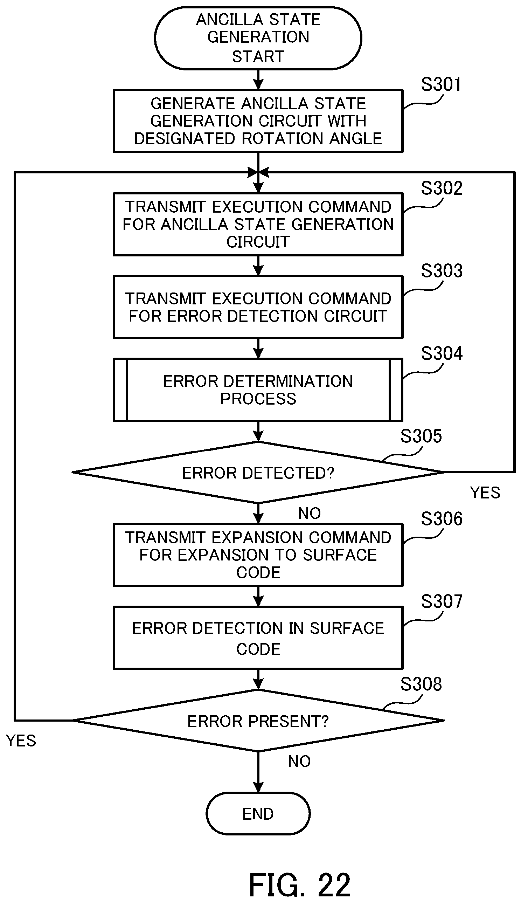

[Step S205] The arbitrary rotation execution unit 32 performs the ancilla state generation process. Details of the ancilla state generation process will be described later (see FIG. 22).

[Step S206] The arbitrary rotation execution unit 32 transmits a gate teleportation execution command to the quantum computer 200. Then, the quantum state initialization unit 32f in the quantum computer 200 initializes the physical qubits around the [[4,1,1,2]] code 52 representing the ancilla state so as to perform the conversion to a surface code with predetermined code distance. Then, the gate teleportation unit 32h performs the gate operation of the gate teleportation circuit 50 using the logical qubit representing the quantum state to be rotated and the logical qubit representing the ancilla state as the inputs.

[Step S207] The gate teleportation success-failure determination unit 32C determines whether the arbitrary rotation using the gate teleportation circuit 50 has succeeded. If a forward rotation has been performed, the gate teleportation success-failure determination unit 32C determines that the rotation has succeeded, and advances the process to step S209. If an inverse rotation has been performed, the gate teleportation success-failure determination unit 32c determines that the rotation has failed, and advances the process to step S208.

[Step S208] The gate teleportation success-failure determination unit 32c instructs the circuit generation unit 32a to update the rotation angle by doubling the current value. Thereafter, the gate teleportation success-failure determination unit 32c advances the process to step S205.

[Step S209] The quantum circuit execution control unit 120 determines whether the last operation in the quantum circuit is complete. If the last operation in the quantum circuit is complete, the quantum circuit execution control unit 120 completes the quantum circuit execution process. If any unprocessed operation remains, the quantum circuit execution control unit 120 advances the process to step S201.

Next, the ancilla state generation process will be described in detail.

FIG. 22 is a flowchart illustrating an example procedure for the ancilla state generation process. Hereinafter, the process illustrated in FIG. 22 will be described in order of step numbers.

[Step S301] The circuit generation unit 32a generates an ancilla state generation circuit for generating an ancilla state with a designated rotation angle. For example, before the execution of the gate teleportation circuit 50, the circuit generation unit 32a generates an ancilla state generation circuit with a rotation angle designated by an arbitrary-rotation quantum gate. After the rotation operation by the gate teleportation circuit 50 fails, the circuit generation unit 32a generates an ancilla state generation circuit with a rotation angle that is double the previous rotation angle.

[Step S302] The circuit generation unit 32a transmits an execution command for the ancilla state generation circuit to the ancilla state generation circuit execution unit 32d of the quantum computer 200. The execution command for the ancilla state generation circuit includes circuit information indicating the ancilla state generation circuit to be executed. In response to the execution command, the ancilla state generation circuit execution unit 32d executes the ancilla state generation circuit.

[Step S303] The circuit generation unit 32a transmits, to the quantum computer 200, an execution command for an error detection circuit that detects an error in an ancilla state. In the quantum computer 200, the first error detection circuit execution unit 32e executes the error detection circuit. Then, the first error detection circuit execution unit 32e transmits a measurement value obtained by executing the error detection circuit to the error determination unit 32b.

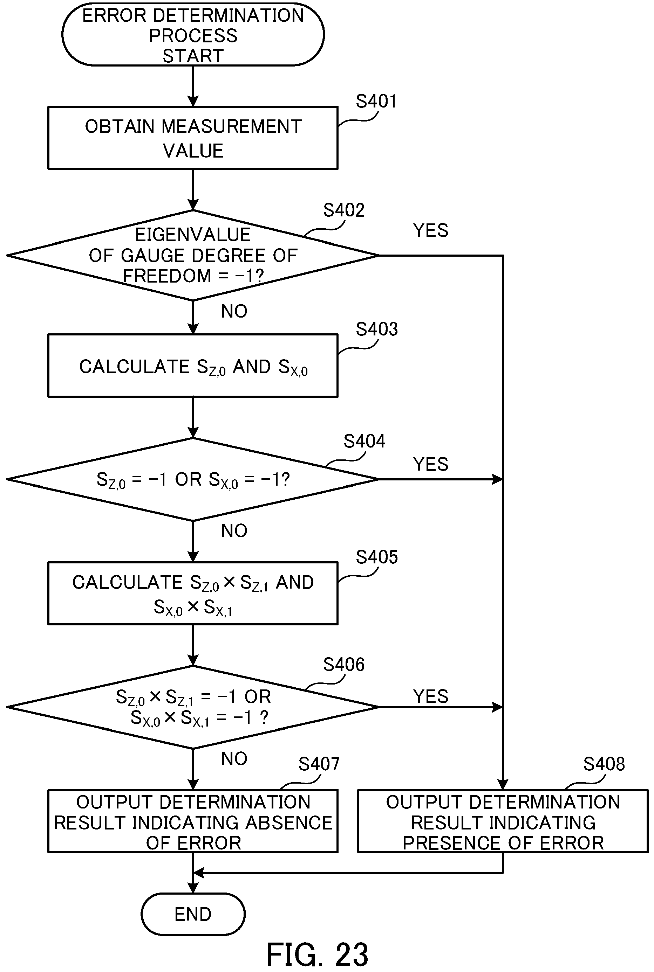

[Step S304] The error determination unit 32b performs an error determination process on the ancilla state. Details of a procedure for the error determination process will be described later (see FIG. 23).

[Step S305] The error determination unit 32b determines whether an error has been detected by the error determination process. When an error has been detected, the error determination unit 32b transmits a regeneration signal to the ancilla state generation circuit execution unit 32d, and advances the process to step S302. If no error has been detected, the error determination unit 32b advances the process to step S306.

[Step S306] The error determination unit 32b transmits an expansion command for expansion to a surface code to the quantum state initialization unit 32f. In response to the expansion command for expansion to a surface code, the quantum state initialization unit 32f expands the ancilla state represented by the [[4,1,1,2] code to a surface code with predetermined code distance. Thereafter, the second error detection circuit execution unit 32g executes an error detection circuit for the surface code. Then, the second error detection circuit execution unit 32g transmits the measurement value obtained by executing the error detection circuit to the error determination unit 32b.

[Step S307] The error determination unit 32b performs the error detection process on the surface code.

[Step S308] If an error is present in the surface code, the error determination unit 32b transmits a regeneration signal to the ancilla state generation circuit execution unit 32d, and advances the process to step S302. If an error is absent, the error determination unit 32b completes the ancilla state generation process.

Next, a procedure for the error determination process on an ancilla state will be described in detail.

FIG. 23 is a flowchart illustrating an example procedure for the error determination process. Hereinafter, the process illustrated in FIG. 23 will be described in order of step numbers.

[Step S401] The error determination unit 32b receives a measurement value obtained by executing an error detection circuit for error detection in an ancilla state.

[Step S402] The error determination unit 32b determines whether the eigenvalue of a gauge degree of freedom is "-1". The eigenvalue of the gauge degree of freedom is each measurement result (measurement result #1 and measurement result #2) of the measurement qubit $M_1$ and the measurement qubit $M_2$ in the first measurement (see FIG. 16). When a YY error has occurred, the eigenvalue of the gauge degree of freedom is "-1". If the eigenvalue of the gauge degree of freedom is "-1", the error determination unit 32b advances the process to step S408. If the eigenvalue of the gauge degree of freedom is "+1", the error determination unit 32b advances the process to step S403.

[Step S403] The error determination unit 32b calculates a Z stabilizer eigenvalue "$S_{Z,0}$" and an X stabilizer eigenvalue "$S_{X,0}$". The Z stabilizer eigenvalue "$S_{Z,0}$" is obtained by "measurement result #1 $\times$ measurement result #2" using the measurement results (measurement result #1 and measurement result #2) of the measurement qubit $M_1$ and the measurement qubit $M_2$ in the first measurement (see FIG. 16). The X stabilizer eigenvalue "$S_{X,0}$" is obtained by "measurement result #3 $\times$ measurement result #4" using the measurement results (measurement result #3 and measurement result #4) of the measurement qubit $M_0$ and the measurement qubit $M_3$ in the second measurement (see FIG. 16).

[Step S404] The error determination unit 32b determines whether either the Z stabilizer eigenvalue "$S_{Z,0}$" or the X stabilizer eigenvalue "$S_{X,0}$" is "-1". If either is "-1", the error determination unit 32b advances the process to step S408. If both the Z stabilizer eigenvalue "$S_{Z,0}$" and the X stabilizer eigenvalue "$S_{X,0}$" are "+1", the error determination unit 32b advances the process to step S405.

[Step S405] The error determination unit 32b calculates a Z stabilizer eigenvalue difference "$S_{Z,0} \times S_{Z,1}$" and an X stabilizer eigenvalue difference "$S_{X,0} \times S_{X,1}$". The Z stabilizer eigenvalue "$S_{Z,1}$" is obtained by "measurement

result #5 $\times$ measurement result #6" using the measurement results (measurement result #5 and measurement result #6) of the measurement qubit $M_1$ and the measurement qubit $M_2$ in the third measurement (see FIG. 16). The X stabilizer eigenvalue "$S_{X,1}$" is obtained by "measurement result #7 $\times$ measurement result #8" using the measurement results (measurement result #7 and measurement result #8) of the measurement qubit $M_0$ and the measurement qubit $M_3$ in the fourth measurement (see FIG. 16).

[Step S406] The error determination unit 32b determines whether either the Z stabilizer eigenvalue difference "$S_{Z,0} \times S_{Z,1}$" or the X stabilizer eigenvalue difference "$S_{X,0} \times S_{X,1}$" is "-1". If either is "-1", the error determination unit 32b advances the process to step S408. If both "$S_{Z,0} \times S_{Z,1}$ and "$S_{X,0} \times S_{X,1}$" are "+1", the error determination unit 32b advances the process to step S407.

[Step S407] The error determination unit 32b outputs an error determination result indicating the absence of an error. Thereafter, the error determination unit 32b completes the error determination process.

**EP 4 675 513 A1**

[Step S408] The error determination unit 32b outputs an error determination result indicating the presence of an error. Thereafter, the error determination unit 32b completes the error determination process.

In this manner, the error detection including a YY error that is generated during the generation of an ancilla state is performed. To enable the detection of a YY error leads to a reduction in the logical error rate of an ancilla state.

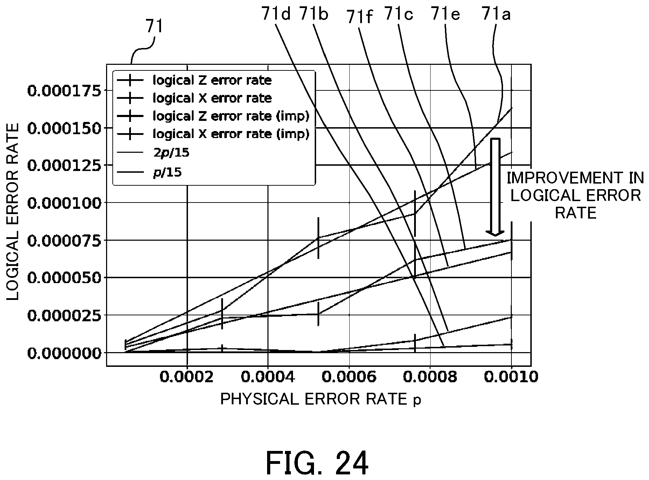

FIG. 24 illustrates an example of logical error rates obtained in the case where error detection including a YY error is performed. FIG. 24 illustrates the evaluation results of the logical error rates in the case of modeling using a circuit-level noise model. The circuit-level noise model assumes that an error occurs in every operation (initialization, gate operation, measurement), and is a model that closely approximate actual quantum computation. A graph 71 represents changes in the logical error rate according to the physical error rate, assuming that an error occurs with a physical error rate p in every operation including initialization, gate operation, and measurement.

The horizontal axis of the graph 71 represents the physical error rate p, and the vertical axis represents the logical error rate. A polygonal line 71a represents the logical Z error rate in the case where no YY error is detectable (using the error detection circuit 61 in FIG.9). A polygonal line 71b represents the logical X error rate in the case where no YY error is detectable (using the error detection circuit 61 in FIG.9). A polygonal line 71c represents the logical Z error rate in the case where a YY error is detectable (using the error detection circuit 63 in FIG.13). A polygonal line 71d represents the logical X error rate in the case where a YY error is detectable (using the error detection circuit 63 in FIG.13). A straight line 71e represents a theoretical logical error rate "2p/15" in the case where no YY error is detectable (using the error detection circuit 61 in FIG.9). A straight line 71f represents a theoretical logical error rate "p/1" in the case where a YY error is detectable (using the error detection circuit 63 in FIG.13).

A YY error that occurs during the generation of an ancilla state causes a Z error in a logical qubit. Therefore, to enable the detection of a YY error leads to a reduction in the logical error rate. For example, the polygonal line 71a of the logical Z error rate in the case where no YY error is detectable is asymptotic to the line of "2p/15". On the other hand, the polygonal line 71c of the logical Z error rate in the case where a YY error is detectable is asymptotic to the line of "p/15".

As illustrated in FIG. 24, to enable the detection of a YY error that occurs during the generation of an ancilla state for implementing a phase rotation gate leads to a reduction in the logical error rate of the ancilla state. As a result, it is possible to perform the gate operation of the phase rotation gate using an ideal ancilla state and thus reduce the occurrence of errors in the phase rotation gate.

Next, the evaluation result of the probability of failure in the generation of an ancilla state due to the detection of a YY error in the case of modeling using the circuit-level noise model will be described.

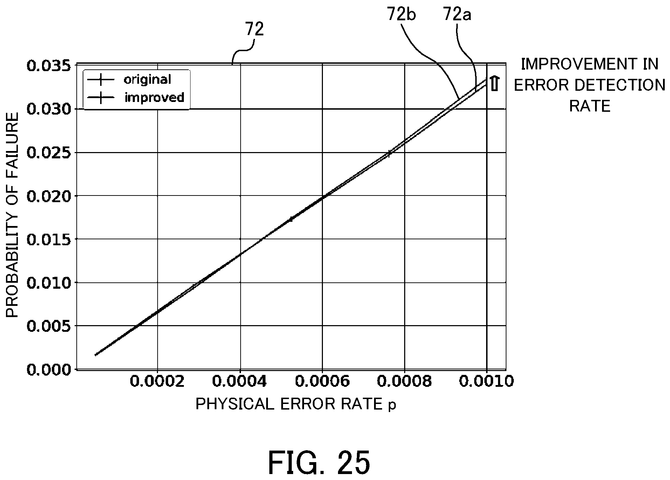

FIG. 25 illustrates an example of probabilities of failure in the generation of an ancilla state. In a graph 72, the horizontal axis represents the physical error rate p, and the vertical axis represents the probability of failure in the generation of an ancilla state. A polygonal line 72a represents the probability of failure in the generation of an ancilla state in the case where no YY error is detected. A polygonal line 72b represents the probability of failure in the generation of an ancilla state in the case where a YY error is detected.

As seen in the graph 72, the probability of failure in the generation of an ancilla state is slightly higher in the case where the error detection including a YY error is performed (polygonal line 72b) than in the case where no YY error is detected (polygonal line 72a). A higher probability of failure in the generation of an ancilla state means that the error detection rate is improved.

Even if the detection of a YY error is made possible, the change in the overall error detection rate is very small. Therefore, the frequency of failing to generate an ancilla state and generating an ancilla state again does not significantly increase.

Although the embodiments have been illustrated above, the configuration of each unit described in the embodiments may be replaced with another configuration having the same function. Any other components or steps may be added. Furthermore, any two or more configurations (features) of the above-described embodiments may be combined.

In one aspect, it is possible to reduce the occurrence of errors in a phase rotation gate.

In any of the above aspects, the various features may be implemented in hardware, or as software modules running on one or more processors/computers.

The invention also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program embodying the invention may be stored on a non-transitory computer-readable medium, or it could, for example, be in the form of a signal such as a downloadable data signal provided from an Internet website, or it could be in any other form.

18

**Claims**

1. A computer program that causes a computer to perform a process comprising:

   causing a quantum computer (1) to perform a first gate operation in accordance with an ancilla state generation circuit (5) representing a procedure of generating a code (2a) including a logical qubit (5b) and a gauge qubit (5c), the logical qubit (5b) representing an ancilla state to be input to a gate teleportation circuit (4), the gauge qubit (5c) representing a redundant degree of freedom other than the ancilla state, the gate teleportation circuit (4) being configured to implement a phase rotation gate (3);
   causing the quantum computer (1) to perform a second gate operation in accordance with an error detection circuit (6) representing a procedure of detecting an error occurring in a plurality of physical qubits (2b to 2e) constituting the code (2a) generated by the first gate operation; and
   determining a presence or absence of the error, based on a measurement value obtained by the second gate operation, the measurement value indicating a state of the gauge qubit (5c).

2. The computer program according to claim 1, wherein

   the causing the quantum computer (1) to perform the second gate operation includes causing the quantum computer (1) to perform the second gate operation in accordance with the error detection circuit (6) in which a second circuit (6b) for measuring an eigenvalue of an X stabilizer is arranged after a first circuit (6a) for measuring an eigenvalue of a Z stabilizer on the plurality of physical qubits (2b to 2e), and
   the determining of the presence or absence of the error includes determining the presence or absence of the error, based on the measurement value obtained by executing the first circuit (6a).

3. The computer program according to claim 2, wherein

   the causing the quantum computer (1) to perform the first gate operation includes causing the quantum computer (1) to perform the first gate operation in accordance with the ancilla state generation circuit (5) including a two-qubit rotation gate (5a) that applies a phase rotation to a first physical qubit and a second physical qubit,
   the causing the quantum computer (1) to perform the second gate operation includes causing the quantum computer (1) to perform the second gate operation in accordance with the error detection circuit (6) in which the first circuit (6a) including a first CNOT gate and a second CNOT gate and the second circuit (6b) are arranged, the first CNOT gate using the first physical qubit as a control qubit and a measurement qubit as a target qubit, the second CNOT gate using the second physical qubit as a control qubit and the measurement qubit as a target qubit, and
   the determining of the presence or absence of the error includes determining the presence or absence of the error, based on the measurement value in a Z basis of the measurement qubit.

4. The computer program according to any of the preceding claims, wherein the determining of the presence or absence of the error includes determining the presence or absence of the error, based on a measurement value indicating an eigenvalue of the degree of freedom represented by the gauge qubit (5c).

5. The computer program according to claim 1 or 2, wherein

   the causing the quantum computer to perform the first gate operation includes causing the quantum computer to perform the first gate operation in accordance with the ancilla state generation circuit (5) including a two-qubit rotation gate that applies a phase rotation to a first physical qubit and a second physical qubit, and
   the determining of the presence or absence of the error includes determining that the error is present, in response to the measurement value indicating the state of the gauge qubit changed due to a YY error occurring during a third gate operation of the two-qubit rotation gate.

6. The computer program according to claim 1 or 2, wherein the causing the quantum computer to perform the first gate operation includes causing the quantum computer to perform the first gate operation representing the procedure of generating a [[4,1,1,2]] code in which a number of physical qubits to be used is four, the logical qubit representing the ancilla state is one bit, the gauge qubit is one bit, and a code distance is two.

7. A quantum computation support method executed by a computer, the quantum computation support method comprising:

causing a quantum computer (1) to perform a first gate operation in accordance with an ancilla state generation circuit (5) representing a procedure of generating a code (2a) including a logical qubit (5b) and a gauge qubit (5c), the logical qubit (5b) representing an ancilla state to be input to a gate teleportation circuit (4), the gauge qubit (5c) representing a redundant degree of freedom other than the ancilla state, the gate teleportation circuit (4) being configured to implement a phase rotation gate (3);

causing the quantum computer (1) to perform a second gate operation in accordance with an error detection circuit (6) representing a procedure of detecting an error occurring in a plurality of physical qubits (2b to 2e) constituting the code (2a) generated by the first gate operation; and

determining a presence or absence of the error, based on a measurement value obtained by the second gate operation, the measurement value indicating a state of the gauge qubit (5c).

8. An information processing apparatus comprising:
   processing means (12) for

   causing a quantum computer (1) to perform a first gate operation in accordance with an ancilla state generation circuit (5) representing a procedure of generating a code (2a) including a logical qubit (5b) and a gauge qubit (5c), the logical qubit (5b) representing an ancilla state to be input to a gate teleportation circuit (4), the gauge qubit (5c) representing a redundant degree of freedom other than the ancilla state, the gate teleportation circuit (4) being configured to implement a phase rotation gate (3);

   causing the quantum computer (1) to perform a second gate operation in accordance with an error detection circuit (6) representing a procedure of detecting an error occurring in a plurality of physical qubits (2b to 2e) constituting the code (2a) generated by the first gate operation; and

   determining a presence or absence of the error, based on a measurement value obtained by the second gate operation, the measurement value indicating a state of the gauge qubit (5c).

FIG. 1

30 QUANTUM
COMPUTING SYSTEM

200
QUANTUM
COMPUTER

100 CLASSICAL
COMPUTER

20

NETWORK

29 TERMINAL

FIG. 2

**FIG. 3**

|0⟩ :  ⬆    |1⟩ :  ⬇    41

SUPERPOSITION
STATE
$\dfrac{1}{\sqrt{2}}$ ( ⬆ + ⬇ )

ERROR
OCCURS
$\dfrac{1}{\sqrt{2}}$ ( ⬆ + ⬇ )

INFORMATION
IS DESTORYED
|0⟩ :  ⬆

FIG. 4

FIG. 5

FIG. 6

43e  PHASE ROTATION GATE

$$R_Z(\theta)$$

50  GATE TELEPORTATION CIRCUIT

GATE OPERATION
TARGET  50a

$$|\psi\rangle_L$$

ANCILLA STATE  50b

$$M_Z$$

50c

$$|m_\theta\rangle_L$$  $$X_L$$  $$R_Z(\theta)|\psi\rangle_L \text{ or } R_Z(-\theta)|\psi\rangle_L$$

$$\boxed{M_Z} = \boxed{\nearrow}$$

$$|\psi\rangle_L$$  $$R_Z(\theta)|\psi\rangle_L$$  $$R_Z(\theta)|\psi\rangle_L$$

$$R_Z(-\theta)|\psi\rangle_L$$  $$R_Z(-3\theta)|\psi\rangle_L$$  $\cdots$

$$R_Z(\theta)$$  $$R_Z(2\theta)$$

AVERAGE NUMBER OF
OPERATIONS UNTIL SUCCESS

$$1 \times \frac{1}{2} + 2 \times \frac{1}{4} + \cdots = \sum_n n 2^{-n} = 2$$

FIG. 7

**50** GATE TELEPORTATION CIRCUIT

GATE OPERATION
TARGET

$|\psi\rangle_L$

ANCILLA STATE

$|m_\theta\rangle_L$

$R_Z(\theta)|\psi\rangle_L$ or $R_Z(-\theta)|\psi\rangle_L$

**51** ANCILLA STATE
GENERATION CIRCUIT

51c 51e

$|0\rangle_0$

51a

$|0\rangle_1$ H

$R_{Z_0Z_2}(\theta)$

$|m_\theta\rangle_L|0\rangle_G$

$|0\rangle_2$

51b

$|0\rangle_3$ H

GAUGE QUBIT

51d

**52**

FIG. 8

[[4,1,1,2]] CODE

FIG. 9

FIG. 10

ANCILLA STATE GENERATION CIRCUIT

51

51e

51c

51a

51b

51d

$|0\rangle_0$

$|0\rangle_1$ — $H$

$|0\rangle_2$

$|0\rangle_3$ — $H$

$R_{Z_0 Z_2}(\theta)$

OUTPUT STATE

$R_{Z_L}(\theta)|+\rangle_L|0\rangle_G$

$|m_\theta\rangle_L$

ZZ ERROR

$$Z_L R_{Z_L}(\theta)|+\rangle_L|0\rangle_G$$
$$(Z_L = Z_0 Z_2)$$

YY ERROR

$$Z_L R_{Z_L}(\theta)|+\rangle_L X_G|0\rangle_G = Z_L R_{Z_L}(\theta)|+\rangle_L|1\rangle_G$$
$$(Z_L = Z_0 Z_2, X_G = X_0 X_2)$$

## FIG. 11

STATE
(BEFORE MEASUREMENT)

STATE
(AFTER MEASUREMENT)

FIG. 12

FIG. 13

FIG. 14

[[4,1,1,2]] CODE
STATE TRANSISTION
52a

$$|m_\theta\rangle_L |i\rangle_G$$

i=0(ERROR IS ABSENT)
i=1(ERROR IS PRESENT)

⬇

MEASURE
EIGENVALUES OF
GAUGE X OPERATORS

⬇

$$|m_\theta\rangle_L |+\rangle_G$$
OR
$$|m_\theta\rangle_L |-\rangle_G$$

⬇

MEASURE
EIGENVALUES OF
GAUGE Z OPERATORS

⬇

EIGENVALUES OF GAUGE
X OPERATORS ARE
MEASURED FIRST

YY ERROR
UNDETECTABLE

[[4,1,1,2]] CODE
STATE TRANSISTION
52b

$$|m_\theta\rangle_L |i\rangle_G$$

i=0(ERROR IS ABSENT)
i=1(ERROR IS PRESENT)

⬇

MEASURE
EIGENVALUES OF
GAUGE Z OPERATORS

⬇

$$|m_\theta\rangle_L |i\rangle_G$$

YY ERROR DETECTABLE

⬇

MEASURE
EIGENVALUES OF
GAUGE X OPERATORS

⬇

EIGENVALUES OF GAUGE
Z OPERATORS ARE
MEASURED FIRST

FIG. 15

FIG. 16

52 [[4,1,1,2]] CODE      53  SURFACE CODE

53b  Z STABILIZER

53a  X STABILIZER

FIG. 17

$|\psi\rangle_L$ — $\oplus$ — $M_Z$

$|M_\theta\rangle_L$ — $\bullet$ — $X_L$ — $R_Z(\theta)|\psi\rangle_L$ or $R_Z(-\theta)|\psi\rangle_L$

FIG. 18

SUCCESS OF
ARBITRARY
ROTATION

ARBITRARY ROTATION
COMMAND
(ROTATION ANGLE $\theta$ )

CLASSICAL
COMPUTER
100

32

ARBITRARY ROTATION
EXECUTION UNIT

32c

GATE
TELEPORTATION
SUCCESS–FAILURE
DETERMINATION UNIT

ROTATION
ANGLE × 2

32a

CIRCUIT
GENERATION
UNIT

32b

ERROR
DETERMINATION
UNIT

REGENERATION
SIGNAL
(ERROR IS
PRESENT)

CIRCUIT
INFORMATION

32d

ANCILLA STATE
GENERATION CIRCUIT
EXECUTION UNIT

MEASUREMENT
VALUE

32e

FIRST ERROR DETECTION
CIRCUIT EXECUTION UNIT

EXPANSION
COMMAND FOR
EXPANSION TO
SURFACE CODE

32f

QUANTUM STATE
INITIALIZATION UNIT

MEASUREMENT
VALUE

32g

SECOND ERROR
DETECTION CIRCUIT
EXECUTION UNIT

GATE TELEPORTATION
EXECUTION COMMAND

32h

GATE TELEPORTATION
UNIT

200

QUANTUM COMPUTER

FIG. 19

POST-ROTATION
QUANTUM STATE

QUANTUM
STATE TO BE
ROTATED

START

DECOMPOSE
QUANTUM CIRCUIT
(Clifford + $\phi$) — S101

INITIALIZE QUBIT — S102

QUANTUM
CIRCUIT
EXECUTION — S103

TRANSMIT
COMPUTATION
RESULT — S104

END

FIG. 20

```
          ┌──────────────────┐
          │ QUANTUM CIRCUIT  │
          │    EXECUTION     │
          │      START       │
          └──────────────────┘
                   │
                   ▼
          ┌──────────────────┐   S201
          │ SELECT OPERATION │
          │ TO BE PERFORMED  │
          │      NEXT        │
          └──────────────────┘
                   │
                   ▼
             ╱──────────╲   S202          YES
            ╱  ARBITRARY ╲──────────────────┐
            ╲  ROTATION? ╱                   │
             ╲──────────╱                    │
                   │ NO                       │
                   ▼                          ▼
          ┌──────────────────┐   S203   ┌──────────────────┐   S204
          │ TRANSMIT EXECUTION│          │  OBTAIN ROTATION │
          │ COMMAND FOR       │          │      ANGLE       │
          │ Clifford GATE     │          └──────────────────┘
          │ OPERATION OR      │                   │
          │ MEASUREMENT       │                   ▼
          └──────────────────┘          ┌──────────────────┐   S205
                   │                     │  ANCILLA STATE   │
                   │                     │   GENERATION     │
                   │                     └──────────────────┘
                   │                              │
                   │                              ▼
                   │                     ┌──────────────────┐   S206
                   │                     │ TRANSMIT GATE    │
                   │                     │ TELEPORTATION    │
                   │                     │ EXECUTION        │
                   │                     │ COMMAND          │
                   │                     └──────────────────┘
                   │                              │
                   │                              ▼
                   │                         ╱──────────╲   S207
                   │              YES        ╱  SUCCESS? ╲
                   │◀────────────────────────╲          ╱
                   │                          ╲────────╱
                   │                              │ NO
                   │                              ▼
                   │                     ┌──────────────────┐   S208
                   │                     │ DOUBLE ROTATION  │
                   │                     │     ANGLE        │
                   │                     └──────────────────┘
                   ▼                              │
             ╱──────────╲   S209                  │
            ╱   END OF   ╲                         │
            ╲  QUANTUM   ╱◀────────────────────────┘
            ╲  CIRCUIT? ╱
             ╲──────────╱
             NO │
                │ YES
                ▼
          ┌──────────────────┐
          │       END        │
          └──────────────────┘
```

# FIG. 21

ANCILLA STATE
GENERATION
START

GENERATE ANCILLA STATE
GENERATION CIRCUIT WITH
DESIGNATED ROTATION ANGLE — S301

TRANSMIT EXECUTION COMMAND
FOR ANCILLA STATE GENERATION
CIRCUIT — S302

TRANSMIT EXECUTION COMMAND
FOR ERROR DETECTION CIRCUIT — S303

ERROR DETERMINATION
PROCESS — S304

ERROR DETECTED? — S305

YES

NO

TRANSMIT EXPANSION COMMAND
FOR EXPANSION TO SURFACE
CODE — S306

ERROR DETECTION IN SURFACE
CODE — S307

ERROR PRESENT? — S308

YES

NO

END

FIG. 22

ERROR DETERMINATION
PROCESS
START

OBTAIN MEASUREMENT
VALUE — S401

EIGENVALUE
OF GAUGE DEGREE OF
FREEDOM = −1? — S402 → YES

NO

CALCULATE $S_{Z,0}$ AND $S_{X,0}$ — S403

$S_{Z,0} = -1$ OR $S_{X,0} = -1$? — S404 → YES

NO

CALCULATE $S_{Z,0} \times S_{Z,1}$ AND $S_{X,0} \times S_{X,1}$ — S405

$S_{Z,0} \times S_{Z,1} = -1$ OR $S_{X,0} \times S_{X,1} = -1$? — S406 → YES

NO

OUTPUT DETERMINATION
RESULT INDICATING ABSENCE
OF ERROR — S407

OUTPUT DETERMINATION
RESULT INDICATING
PRESENCE OF ERROR — S408

END

FIG. 23

FIG. 24

FIG. 25

Europäisches
Patentamt

European
Patent Office

Office européen
des brevets

# EUROPEAN SEARCH REPORT

**Application Number**

EP 25 18 5265

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | YUTARO AKAHOSHI ET AL: "Partially Fault-tolerant Quantum Computing Architecture with Error-corrected Clifford Gates and Space-time Efficient Analog Rotations", ARXIV.ORG, CORNELL UNIVERSITY LIBRARY, 201 OLIN LIBRARY CORNELL UNIVERSITY ITHACA, NY 14853, 23 March 2023 (2023-03-23), XP091466791, * abstract; figures 7, 9, 11 * * section IV-B * * section IV-A * * equations (2)-(4) * | 1-8 | INV. G06N10/20 G06N10/70 |
| A | CHIESA A ET AL: "Embedded quantum-error correction and controlled-phase gate for molecular spin qubits", AIP ADVANCES, AMERICAN INSTITUTE OF PHYSICS, 2 HUNTINGTON QUADRANGLE, MELVILLE, NY 11747, vol. 11, no. 2, 18 February 2021 (2021-02-18), XP012254325, DOI: 10.1063/9.0000166 [retrieved on 2021-02-18] * the whole document * | 1-8 | |
| A | HYEONGRAK CHOI ET AL: "Fault Tolerant Non-Clifford State Preparation for Arbitrary Rotations", ARXIV.ORG, CORNELL UNIVERSITY LIBRARY, 201 OLIN LIBRARY CORNELL UNIVERSITY ITHACA, NY 14853, 30 March 2023 (2023-03-30), XP091471799, * the whole document * | 1-8 | |

**TECHNICAL FIELDS SEARCHED (IPC)**

G06N

The present search report has been drawn up for all claims

| Place of search | Date of completion of the search | Examiner |
|---|---|---|
| The Hague | 30 November 2025 | Aoun, Marc |

EPO FORM 1503 03.82 (P04C01)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YUTARO AKAHOSHI** ; **KAZUNORI MARUYAMA** ; **HIROTAKA OSHIMA** ; **SHINTARO SATO** ; **KEISUKE FUJII**. Partially Fault-tolerant Quantum Computing Architecture with Error-corrected Clifford Gates and Space-time Efficient Analog Rotations. *arXiv:2303.13181v1*, 23 March 2023

- **YUTARO AKAHOSHI** ; **KAZUNORI MARUYAMA** ; **HIROTAKA OSHIMA** ; **SHINTARO SATO** ; **KEISUKE FUJII**. Partially Fault-Tolerant Quantum Computing Architecture with Error-Corrected Clifford Gates and Space-Time Efficient Analog Rotations. *PRX QUANTUM*, 05 March 2024, vol. 5, 010337